# EUROPEAN PATENT APPLICATION

(11) **EP 4 432 589 A1**
(43) Date of publication of application: **18.09.2024**
(21) Application number: 24163878.2
(22) Date of filing: 15.03.2024
(51) Int. Cl.: H04L 1/1829, H04L 1/1867

(54) **ACKNOWLEDGMENT WITH RETRANSMISSION LINK INFORMATION**

(30) Priority: 16.03.2023 US 202363452459 P
(71) Applicant: Comcast Cable Communications LLC, Philadelphia, Pennsylvania 19103 (US)
(72) Inventor: BAYKAS, Tuncer, Philadelphia, 19103 (US); KIM, Jeongki, Philadelphia, 19103 (US); DINAN, Esmael Hejazi, Philadelphia, 19103 (US); LANANTE, Leonardo Alisasis, Philadelphia, 19103 (US); HUQ, Kazi Mohammed Saidul, Philadelphia, 19103 (US)
(74) Representative: V.O.

(57) **Abstract**

A wireless device, such as a station, may communicate with an access point or another station. A data transmission may overlap with an acknowledgment message associated with the data transmission. The acknowledgment message may indicate a detected error in an initial portion of the data transmission and one or more suggested links for retransmission of the data. The data may be retransmitted using a suggested link indicated in the acknowledgment message. The data may be retransmitted in full, or partially, based on the detected error and/or based on a characteristic of the detected error.

## Description

### CROSS-REFERENCE TO RELATED APPLICATIONS

This application claims the benefit of U.S. Provisional Application No. 63/452,459, filed on March 16, 2023. The above referenced application is hereby incorporated by reference in its entirety.

### BACKGROUND

A wireless device, such as a station, communicates with an access point or another station via a frequency band. A data unit is used to transmit data via the frequency band.

### SUMMARY

The following summary presents a simplified summary of certain features. The summary is not an extensive overview and is not intended to identify key or critical elements.

A wireless device, such as a station, may communicate with an access point or another station. Communications may occur via a single link or different links (e.g., via frequency bands). For example, a first data unit may be communicated via a first link and an acknowledgment frame may be communicated via a second link. The acknowledgment frame may overlap with transmission of the first data unit. For example, an acknowledgment frame may be sent based on detecting an error in the first data unit, without waiting for transmission of the first data unit to be completed. The acknowledgment frame may indicate the error as well as a third link, so that a second data unit may be communicated via the third link. The second data unit may be a retransmission of the entire first data unit or a portion of the first data unit, for example, based on the error. The second data unit may be communicated without waiting for the transmission of the first data unit to be completed. For example, the second data unit may be transmitted concurrently with the transmission of the first data unit. A response frame may be communicated, for example, based on the acknowledgment frame. The response frame may confirm the third link, or select the third link, for example, if the acknowledgment frame indicates more than one link.

These and other features and advantages are described in greater detail below.

### BRIEF DESCRIPTION OF THE DRAWINGS

Some features are shown by way of example, and not by limitation, in the accompanying drawings. In the drawings, like numerals reference similar elements.
FIG. 1 shows example wireless communication networks.
FIG. 2 shows example devices in a communication network.
FIG. 3A shows an example of Physical Layer Protocol Data Unit (PPDU).
FIG. 3B shows another example of PPDU.
FIG. 4 shows an example for wireless medium access by a plurality of stations (STAs) in a Wireless Local Area Network (WLAN).
FIG. 5 shows an example multi-link acknowledgment operation.
FIG. 6 shows an example operation.
FIG. 7 shows another example operation.
FIG. 8 shows an example method.
FIG. 9 shows an example method.
FIG. 10 shows an example operation.
FIG. 11 shows an example operation.
FIG. 12 shows another example operation.
FIG. 13 shows another example operation.
FIG. 14 shows another example operation.
FIG. 15 shows another example operation.
FIG. 16 shows example acknowledgment frames.
FIG. 17 shows an example acknowledgment response frame.
FIG. 18 shows an example field of an acknowledgment frame.
FIG. 19 shows an example encoding.
FIG. 20 shows an example method.
FIG. 21 shows an example method.
FIG. 22 shows example elements of a computing device that may be used to implement any of the various devices described herein.

### DETAILED DESCRIPTION

The accompanying drawings and descriptions provide examples. It is to be understood that the examples shown in the drawings and/or described are non-exclusive, and that features shown and described may be practiced in other examples. Examples are provided for operation of wireless communication systems.

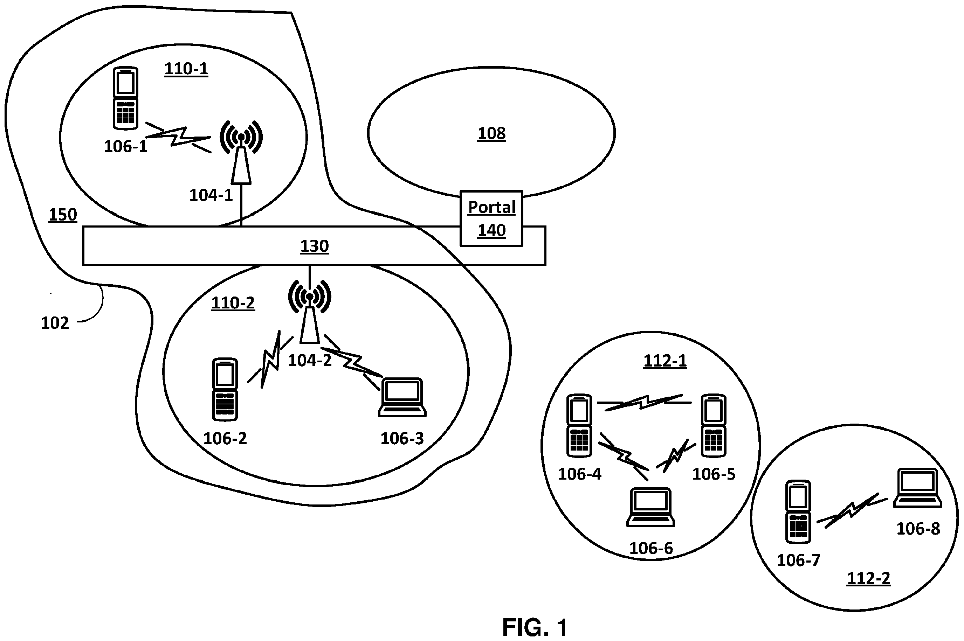

FIG. 1 shows example wireless communication networks. The example wireless communication networks may be a wireless local area network (WLAN) 102. The WLAN 102 may comprise an Institute of Electrical and Electronic Engineers (IEEE) 802.11 infra-structure network, or any other type of communication network. The WLAN 102 may comprise one or more basic service sets (BSSs) 110-1 and 110-2. BSSs 110-1 and 110-2 may each include a set of an access point (AP or AP STA) and at least one station (STA or non-AP STA). For example, BSS 110-1 includes an AP 104-1 and a STA 106-1, and BSS 110-2 includes an AP 104-2 and STAs 106-2 and 106-3. The AP and the at least one STA in a BSS may be configured to perform an association procedure to communicate with each other.

The WLAN 102 may comprise a distribution system (DS) 130. DS 130 may be configured to connect BSS 110-1 and BSS 110-2. DS 130 may enable an extended service set (ESS) 150 by being configured to connect BSS 110-1 and BSS 110-2. The ESS 150 may be a network comprising one or more Aps (e.g., Aps 104-1 and AP 104-2) that may be connected via the DS 130. The APs included in ESS 150 may have the same service set identification (SSID). WLAN 102 may be coupled to one or more external networks. For example, WLAN 102 may be connected to another network 108 (e.g., 802.X) via a portal 140. Portal 140 may function as a bridge connecting DS 130 of WLAN 102 with the other network 108.

The example wireless communication networks may also, or alternatively, comprise one or more ad-hoc networks and/or independent BSSs (IBSSs). For example, FIG. 1 shows example IBSSs, where STAs 106-4, 106-5 and 106-6 may be configured to form a first IBSS 112-1 and STAs 106-7 and 106-8 may be configured to form a second IBSS 112-2. An ad-hoc network and/or IBSS is a network that includes a plurality of STAs without a centralized communication device, such as an AP. The plurality of STAs may be configured to communicate without requiring the presence of an AP. For example, the plurality of STAs in the IBSS may communicate with each other using peer-to-peer communication (e.g., not via an AP). IBSSs do not include a centralized management entity (e.g., an AP) configured to perform a centralized management. STAs within an IBSS are managed in a distributed manner. STAs forming an IBSS may be fixed and/or mobile. The STAs (e.g., STAs 106-4, 106-5, 106-6, 106-7, 106-8) may or may not be permitted to access the DS 130 to constitute a self-contained network.

A STA may comprise one or more layers in accordance with the open systems interconnection (OSI) model. For example, STAs may comprise a medium access control (MAC) layer that may be in accordance with a defined standard (e.g., an IEEE 802.11 standard, or any other standard). A physical (PHY) layer interface for a radio medium may include the APs and the non-AP stations (STAs). The STA may comprise one or more of a computing device, a mobile terminal, a wireless device, a wireless transmit/receive unit (WTRU), user equipment (UE), a mobile station (MS), a mobile subscriber unit, and/or a user device. For example, with respect to wireless LAN communications, a device participating in uplink multi-user, multiple input, multiple output (MU-MIMO) and/or uplink orthogonal frequency division multiple access (OFDMA) transmission may be referred to as a STA. STAs may not be limited to only participating in wireless LAN communications, and may perform other types of communications, operations, and/or procedures.

A frequency band to be used for communication may include multiple sub-bands and/or frequency channels. For example, messages (e.g., data packets, physical layer protocol data units (PPDUs)) conforming to the IEEE 802.11 standard (e.g., IEEE 802.11n, 802.11ac, 802.1 1ax, 802.11be, etc., standards) may be sent (e.g., transmitted) over the 2.4, 5 GHz, and/or 6 GHz bands. Each of the bands may be divided into multiple 20 MHz channels. PPDUs conforming to the IEEE 802.11 standard may be sent, for example, via a physical channel with a minimum bandwidth of 20 MHz. Larger channels may be formed through channel bonding. For example, the PPDUs may be sent via physical channels with bandwidths of 40 MHz, 80 MHz, 160 MHz, 520 MHz, or any other frequency greater than 20 MHz, by bonding together multiple 20 MHz channels. For example, PPDUs conforming to the IEEE 802.11ad and/or 802.11ay standard amendments may be sent over the 60 GHz band, which may be divided into multiple 2.16 GHz channels. The PPDUs may be sent over a physical channel having a minimum bandwidth of 2.16 GHz. Larger channels may be formed through channel bonding. For example, PPDUs may be sent over physical channels having bandwidths of 4.32 GHz, 6.48 GHz, 8.64 GHz by bonding together multiple 2.16 GHz.

A PPDU may be a composite structure that may comprise a PHY preamble and a payload in the form of a physical layer convergence protocol (PLCP) service data unit (PSDU). For example, the PSDU may comprise a PLCP preamble, a header, and/or one or more MAC protocol data units (MPDUs). Information indicated by the PHY preamble may be used by a receiving device to decode subsequent data in the PSDU. Preamble fields may be duplicated and sent in each of multiple component channels in a bonded channel, for example, if the PPDU is sent via the bonded channel. The PHY preamble may comprise both a legacy portion (e.g., a legacy preamble) and a non-legacy portion (e.g., a non-legacy preamble). The legacy preamble may be used for packet detection, automatic gain control and channel estimation, etc. The legacy preamble also may generally be used to maintain compatibility with legacy devices. The information provided in, and the format and coding of the non-legacy portion of the preamble may be based on the particular IEEE 802.11 protocol to be used to send the payload.

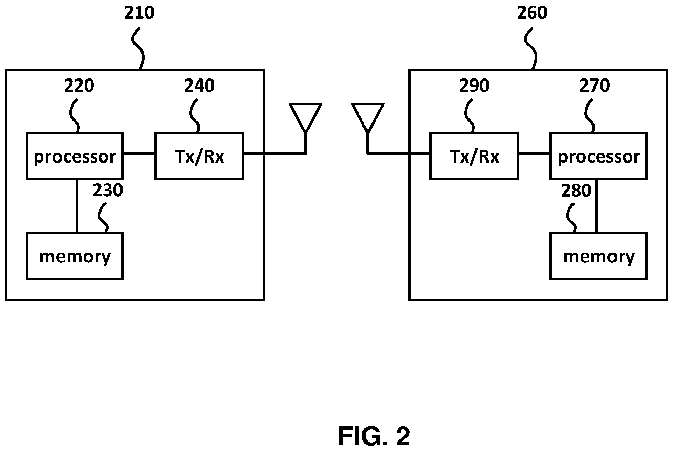

FIG. 2 shows example devices in a communication network. The communication network of FIG. 2 may comprise multiple devices (e.g., communication devices 210 and 260). The communication devices 210 and 260 may perform various functions and procedures as described herein. For example, the communication device 210 may operate as an AP (e.g., an AP STA) and the communication device 260 may operate as a STA (e.g., a non-AP STA). The communication device 210 may operate as a STA (e.g., a non-AP STA) and the communication device 260 may operate as an AP (e.g., an AP STA). Also, or alternatively, the communication device 210 and the communication device 260 may both operate as STAs (e.g., a non-AP STAs) or may both operate as APs (e.g., AP STAs).

The communication device 210 may comprise at least one processor 220, a memory 230, and/or at least one transceiver (e.g., RF unit) 240. The communication device 260 may comprise at least one processor 270, memory 280, and/or at least one transceiver (e.g., RF unit) 290. The transceivers (e.g., transceivers 240, 290) may send/receive radio signals. The transceivers may operate as a PHY layer (e.g., a PHY layer in accordance with an IEEE 802.11 protocol, a 3^{rd} generation partnership project (3GPP) protocol, etc.). The processors (e.g., processors 220, 270) may operate as a PHY layer and/or MAC layer. The processors may be operatively connected to the transceivers, respectively. The communication devices 210 and/or 260 may be a multi-link device (MLD), that is a device capable of operating over multiple links (e.g., as defined by the IEEE 802.11be standard amendment). A MLD has multiple PHY layers. The multiple PHY layers may be implemented using one or more of transceivers 240 and/or 290. Processor 220 and/or 270 may implement functions of the PHY layer, the MAC layer, and/or a logical link control (LLC) layer of the corresponding communication devices 210 and/or 260.

The processors and/or the transceivers may comprise an application specific integrated circuit (ASIC), other chipset, logic circuit, and/or data processor. The memory (e.g., memory 230, 280) may include read-only memory (ROM), random access memory (RAM), flash memory, memory card, storage medium and/or other storage unit. The procedures described herein may be executed by modules that perform various functions described herein (e.g., in accordance with instructions stored in the memory). The modules can be stored in the memory and executed by the processor. The memory may be integrated with the processor or may be external to the processor. The memory may be operatively connected to the processor. The processor may implement the functions, processes and/or methods as described herein. For example, the processor 220 may be implemented to perform operations of the AP as described herein. For example, the processor 270 may be implemented to perform operations of the STA as described herein. The memory may store instructions that, when executed by one or more processors, cause the communication device to perform methods as described herein. For example, the memory may be a non-transitory computer-readable medium comprising instructions that, when executed by the one or more processors, cause the one or more processors to perform methods and operations described herein. For example, the memory 230 may store instructions that, when executed by the processor 220, cause the processor 220 to perform operations of the AP as described herein. For example, the memory 280 may store instructions that, when executed by the processor 270, cause the processor 270 to perform operations of the STA as described herein.

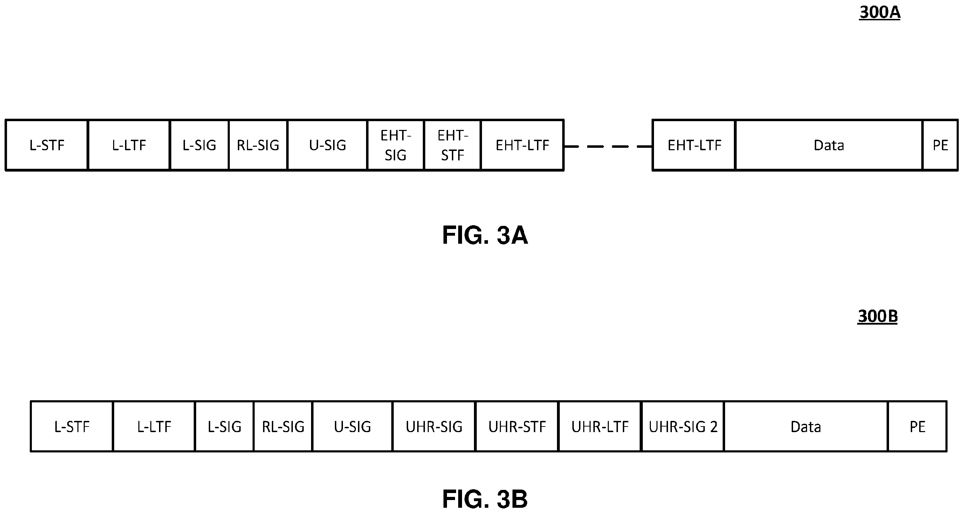

FIG. 3A shows an example PPDU 300A. The PPDU 300A may be used by a device (e.g., STA and/or AP) to send (e.g., transmit) on a wireless medium. The PPDU 300A may be an Extremely High Throughput (EHT) PPDU which may be used by devices conforming to the IEEE 802.1 The standard amendment. Such devices may operate in the 2.4, 5, and/or 6 GHz bands. The PPDU 300A may be sent (e.g., transmitted) over a bandwidth of up to 320MHz. The PPDU 300A may be used by a device for both single user (SU) and multi-user (MU) transmissions.

As shown in FIG. 3A, PPDU 300A may include fields such as an non-HT Short Training field (L-STF), a non-HT Long Training field (L-LTF), a non-High-Throughput (non-HT) Signal field (L-SIG), a non-HT Repeated Signal field (RL-SIG), a Universal Signal field (U-SIG), an EHT Signal Field B (EHT-SIG-B), an EHT Short Training Field (EHT-STF), one or more EHT Long Training field (EHT-LTF), a Data field, and a Packet Extension (PE) field.

The L-STF may be used by a receiver of PPDU 300A to synchronize with the carrier frequency and frame timing of a transmitter of PPDU 300A and to adjust the receiver signal gain. The L-LTF may be used by the receiver of PPDU 300A to estimate channel coefficients, for example, to equalize the channel response (e.g., amplitude and phase distortion) in both Signal fields (e.g., the L-SIG, the RL-SIG, the U-SIG, the EHT-SIG-B) and the Data field of the PPDU 300A.

The L-SIG and the RL-SIG may contain parameters needed to demodulate the Data field. The L-SIG may be equalized using the channel coefficients estimated using the L-LTF and demodulated to obtain the demodulation parameters of the Data field. The U-SIG may ensure forward compatibility of PPDU 300A. At least some PPDUs that may be backward compatible to IEEE 802.11be may contain the same U-SIG field and/or interpretation. IEEE 802.11be conforming devices may be able to understand at least in part a PPDU developed in a future amendment, for example, if those amendments may contain the U-SIG field as well. The EHT-SIG-B may contain indications per STA of resource unit (RU) allocations. A receiving STA may use the indications in the EHT-SIG-B to locate its payload in the Data field of PPDU 300A.

The L-SIG, the RL-SIG, the U-SIG, and/or the EHT-SIG-B fields may be considered as a PHY Header of PPDU 300A. The EHT-STF and the one or more EHT-LTFs may be used by the receiver of PPDU 300A to estimate channel coefficients, for example, to equalize the channel response (e.g., amplitude and phase distortion) in the Data field of the PPDU 300A. The Data field may contain one or more payloads carried by the PPDU 300A. The one or more payloads may comprise MPDUs. The PE field may be an extension of the PPDU 300A that may be designed to give the receiver of PPDU 300A sufficient time to respond, for example, after receiving PPDU 300A.

FIG. 3B shows another example PPDU 300B which may be used by a device (STA or AP) to send (e.g., transmit) on a wireless medium. As shown in FIG. 3B, the PPDU 300B may include fields such as an non-HT Short Training field (L-STF), a non-HT Long Training field (L-LTF), a non-High-Throughput (non-HT) Signal field (L-SIG), a non-HT Repeated Signal field (RL-SIG), a Universal Signal field (U-SIG), an UHR Signal Field (UHR-SIG), an UHR Short Training Field (UHR-STF), one or more UHR Long Training field (UHR-LTF), an UHR Signal Field 2 (UHR-SIG 2), a Data field, and a Packet Extension (PE) field.

The U-SIG may ensure forward compatibility of the PPDU 300B. At least some PPDUs that may be backward compatible to IEEE 802.11be may contain the same U-SIG field and interpretation. IEEE 802.1 The conforming devices may be able to understand at least in part a PPDU developed in a future amendment, for example, if those amendments may contain the U-SIG field as well. The UHR-SIG may contain indications per STA of RU allocations. A receiving STA may use the indications in the UHR-SIG to locate its payload in the Data field of the PPDU 300B.

The UHR-STF and the one or more UHR-LTFs may be used by the receiver of the PPDU 300B to estimate channel coefficients, for example, to equalize the channel response (e.g., amplitude and phase distortion) in the Data field of the PPDU 300B. The UHR-SIG 2 may contain indications for MU-MIMO applications. The UHR-SIG 2 field may also be used for other indications related to the Data field, e.g., modulation and coding scheme (MCS), data type, length, etc.

The L-SIG, the RL-SIG, the U-SIG, the UHR-SIG, and/or the UHR SIG 2 fields may be considered as a PHY Header of PPDU 300B. The Data field may contain one or more payloads carried by the PPDU 300B. The bits to be sent (e.g., transmitted) may be padded with zeros if necessary, scrambled, encoded, and modulated. The PE field may be an extension of PPDU 300B designed to give the receiver of the PPDU 300B sufficient time to respond, for example, after receiving PPDU 300B .

At least some wireless communication standards (e.g., IEEE 802.11 standards) may be designed to operate at different frequency bands. The different frequency bands may comprise a wide range of frequency bands, such as sub-1GHz, TV Whitespace (TVWS), 2.4 GHz, 5 GHz, 6 GHz, 45 GHz (e.g., China mmWave), 60 GHz, and/or Infrared. For example, during the development of the IEEE 802.1 The standard amendment, multi-link operation (MLO) may have been developed for sub-7 GHz bands (e.g., 2.4 GHz, 5 GHz, and/or 6 GHz bands). The MLO may allow an AP conforming to the IEEE 802.11be standard amendment to support more than one sub-7 GHz band. For example, at least some systems (e.g., next generation systems) may support MLO over more bands, including "lightly" licensed bands.

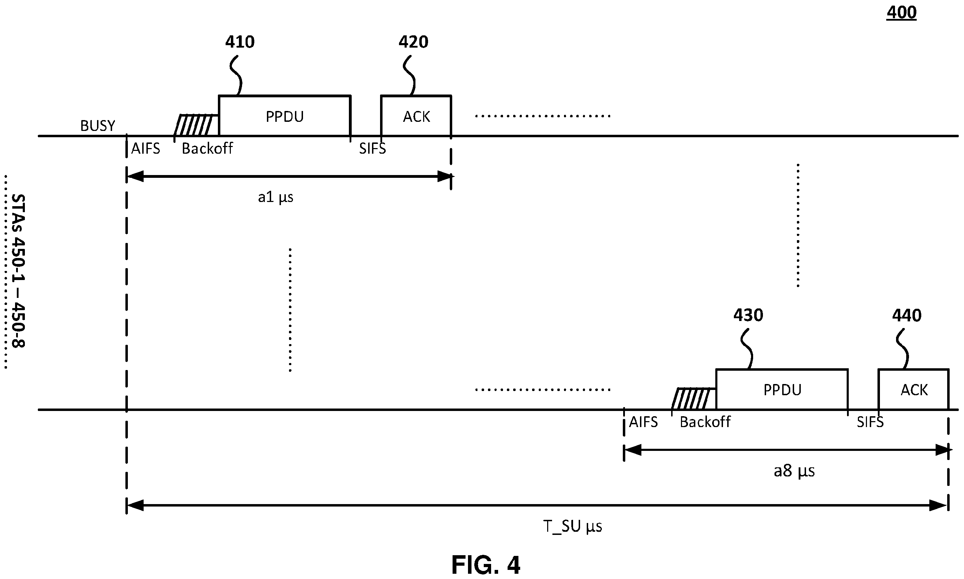

FIG. 4 shows an example for wireless medium access by a plurality of STAs in a WLAN. As indicated in FIG. 4, for example, eight (or any other quantity of) STAs (e.g., 450-1, ..., 450-8) may contend for the medium using Enhanced Distributed Channel Access (EDCA). EDCA may be a listen-before-talk access mechanism that may allow exactly one STA to access a channel and to send (e.g., transmit) a PPDU in a given time slot. A STA may, for example, before transmission using EDCA, listen to the channel for a minimum of an Arbitration Interframe Space (AIFS) duration to determine whether the channel state is IDLE. This listening time for determining whether the channel is IDLE may be followed by one or more backoff slots before the STA attempts to send (e.g., transmit) over the channel. The number of backoff slots may be chosen randomly by the STA. This random selection may reduce the probability of multiple STAs attempting to send (e.g., transmit) at the same time, which may result in a packet detect error. An AP (not shown in FIG. 4) may respond with an acknowledgment (ACK) frame after a Short Interframe Space (SIFS) duration of receiving the PPDU, for example, if the PPDU sent (e.g., transmitted) by the STA is received successfully, for example, by the AP.

For example 400, STAs 450-1, ..., 450-8 may access the channel one by one using EDCA. For example, a STA 450-1 may send (e.g., transmit) a PPDU 410 and may receive an ACK or NACK (negative acknowledgment) frame 420 from an AP. As shown in FIG. 4, the total duration of channel access by the STA 450-1 may include an AIFS duration, a backoff period, the transmission time of PPDU 410, a SIFS duration, and the transmission time of ACK/NACK 420. This total duration of channel access by the STA 450-1 may be expressed as, for example, a1 µs. STAs 450-2 to 450-7 each may access the channel using EDCA and may receive a corresponding ACK or NACK frame from the AP. The total duration of channel access by STAs 450-2 to 450-7 may be expressed as a2 µs to a7 µs, respectively. A STA 450-8 may send (e.g., transmit) a PPDU 430 and may receive an ACK or NACK frame 440 within a total duration of channel access of a8 µs. Channel access by STAs 450-1, ..., 450-8 may require a cumulative duration T_SU µs = a1 µs + a2 µs ... + a7 µs + a8 µs. The T_SU µs duration may represent an average latency of channel access for each STA when the eight STAs are actively accessing the channel as described with respect to FIG. 4.

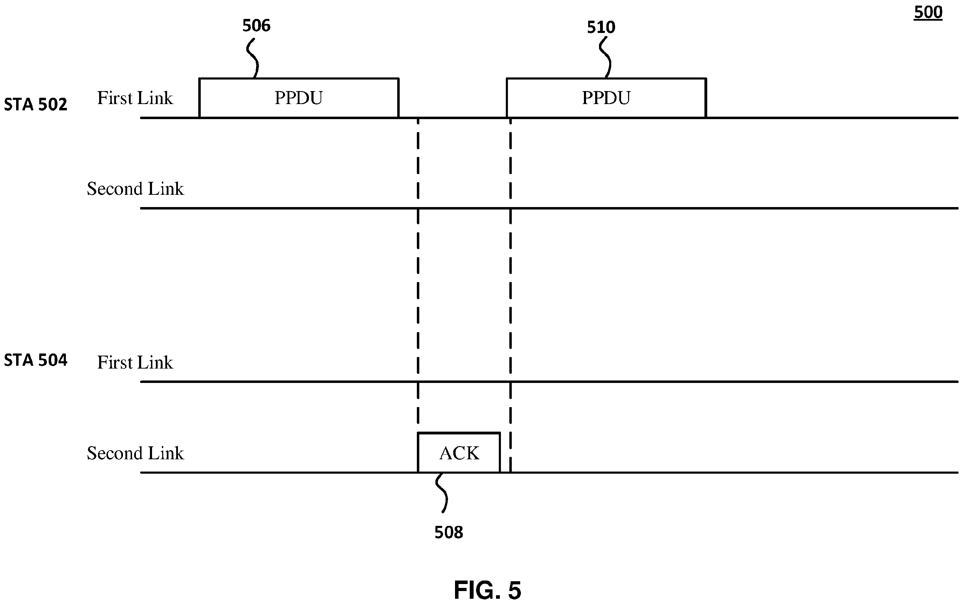

FIG. 5 shows an example multi-link acknowledgment operation. A separate link may be used to send (e.g., transmit) ACK/NACK frames, for example, after or in response to the sent (e.g., transmitted) PPDUs, to enhance channel access delay. For example, a PPDU transmission may occur over a 2.4 GHz link, and the ACK for the PPDU transmission may be sent (e.g., transmitted) over a 5 GHz link. Such an ACK/NACK may be referred to as a crosslink acknowledgment frame (XACK). FIG. 5 shows an example 500 of such operation. As shown in FIG. 5, example 500 may include a STA 502 and a STA 504. STA 502 may send (e.g., transmit) a PPDU 506 to STA 504 on (or via) a first link. For example, STA 504 may receive a part of the PPDU 506 in error. STA 504 may send (e.g., transmit) an ACK frame 508 to STA 502 on a second link (different from the first link), for example, based on (e.g., in response to) receiving a part of the PPDU 506 in error. In at least some operations, STA 504 must wait until an end of reception of the PPDU 506, for example, before it may send (e.g., transmit) ACK frame 508 to STA 502 on (or via) the second link. STA 502 must wait until the end of transmission of the PPDU 506, for example, before it may resend (e.g., re-transmit) PPDU 506 as PPDU 510 due to the erroneous reception. Such operation may result in an unnecessary delay for STA 504 to receive PPDU 506. To address this problem, it has been proposed to transmit an ACK frame during the transmission of the PPDU that the ACK frame acknowledges.

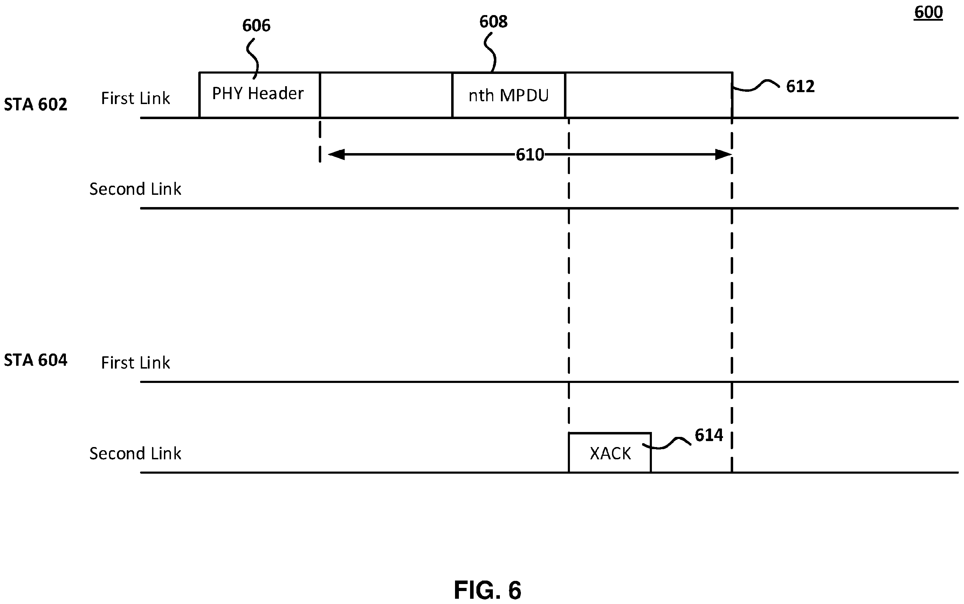

FIG. 6 shows an example operation. More specifically, FIG. 6 shows an example of an early acknowledgment operation. As shown in FIG. 6, an example 600 may include a STA 602 and a STA 604. STAs 602 and 604 may be communicatively coupled by a first link and a second link. The first and second links may correspond to different frequency bands (e.g., 2.4 GHz, 5 GHz, 60 GHz, etc.). The first and second links may correspond to a same frequency band (e.g., 2.4 GHz, 5 GHz, 60 GHz, etc.). STAs 602 and 604 may each comprise a STA or an AP.

A STA 602 may send (e.g., transmit) a first frame to a STA 604, for example, via a first link. In the example 600, a STA 602 may send (e.g., is sending/transmitting) a PPDU 612 to a STA 604, for example, via/on the first link. The PPDU 612 may comprise a preamble (not shown in FIG. 6), a PHY header 606, and a data field 610. PPDU 612 may be, for example, an EHT PPDU as shown by an example PPDU 300A or a UHR PPDU as shown by an example PPDU 300B described herein.

A STA 602 may monitor a second link. A STA 602 may monitor the second link, for example, as the STA 602 may send (e.g., transmit) PPDU 612 over the first link. Specifically, the STA 602 may monitor the second link for an acknowledgment (e.g., XACK) frame from STA 604.

A STA 604 may be configured to determine whether an error is present in a received portion of the first frame. For example, a STA 604 may be configured to determine whether an error is present in a (e.g., each) received MPDU of data field 610 of PPDU 612. The STA 604 may be configured to determine whether an error is present in a (e.g., each) received MPDU of data field 610 of PPDU 612, for example, as the STA 604 receives data field 610 of PPDU 612. Specifically, the STA 604 may check an MPDU of PPDU 612 for errors, for example, as the MPDU is received. The STA 604 may check whether the MPDU is the last MPDU of PPDU 612, for example, if no error is detected in the MPDU. The STA 604 may be configured to acknowledge a received portion of the first frame. For example, the STA 604 may be configured to acknowledge PPDU 612, for example, if the MPDU is the last MPDU of PPDU 612. The STA 604 may be configured to acknowledge PPDU 612, for example, by sending an acknowledgment (or acknowledgment frame) on the first or second link. The STA 604 may proceed to decoding and checking the next MPDU, for example, if the MPDU is not the last MPDU of PPDU 612. The STA 604 may be configured to send (e.g., transmit) an acknowledgment (e.g., XACK) frame, for example, on the second link, indicating the error in the MPDU to STA 602, for example, if an error is detected in the MPDU.

In the example 600, a STA 604 may detect an error in an nth MPDU 608 of data field 610 of PPDU 612. The STA 604 may send (e.g., transmit) an acknowledge (e.g., XACK) frame 614 on the second link to STA 602. The STA 604 may proceed to decode the next received MPDU of data field 610 of PPDU 612, for example, after determining that the nth MPDU 608 is not the last MPDU in data field 610 of PPDU 612. The STA 602 monitoring the second link may receive the acknowledge (e.g., XACK) frame 614 from the STA 604. The STA 602 may decode the acknowledge (e.g., XACK) frame 614 and/or may determine that the acknowledge (e.g., XACK) frame 614 indicates an error in the nth MPDU 608 of PPDU 612, for example, based on (e.g., on, upon, after) receiving the acknowledge (e.g., XACK) frame 614.

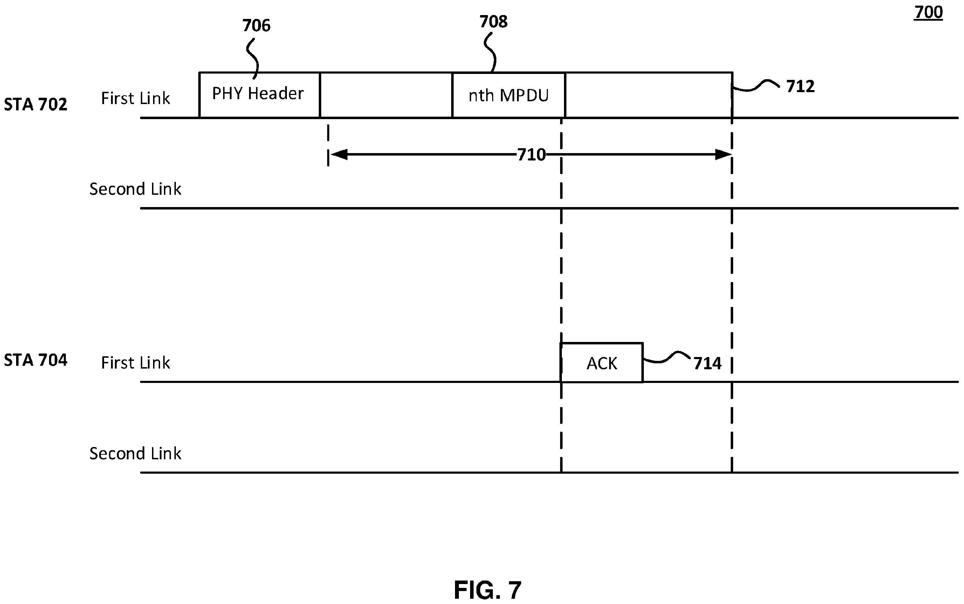

FIG. 7 shows another example operation. More specifically, FIG. 7 shows an example early acknowledgment operation in a full-duplex environment. As shown in FIG. 7, an example 700 may include a STA 702 and a STA 704. STAs 702 and 704 may be communicatively coupled by a first link and, optionally, a second link. The first and second links may correspond to different frequency bands (e.g., 2.4 GHz, 5 GHz, 60 GHz, etc.). The first and second links may correspond to a same frequency band (e.g., 2.4 GHz, 5 GHz, 60 GHz, etc.). STAs 702 and 704 may each comprise a STA or an AP. In the example 700, STAs 702 and 704 may be configured to support full-duplex communication on a given link (e.g., the first link). The STAs 702 and 704 may each send (e.g., transmit) and/or receive simultaneously on the link.

A STA 702 may send (e.g., transmit) a first frame to a STA 704, for example, via a first link. In the example 700, a STA 702 may send (e.g., is sending/transmitting) a PPDU 712 to a STA 704, for example, via/on the first link. The PPDU 712 may comprise a preamble (not shown in FIG. 7), a PHY header 706, and a data field 710. The PPDU 712 may be, for example, an EHT PPDU as shown by an example PPDU 300A or a UHR PPDU as shown by an example PPDU 300B described herein.

A STA 702 may monitor the same link. The STA 702 may monitor the same link (e.g., the first link) for frames from a STA 704, for example, as the STA 702 sends (e.g., transmits) the PPDU 712, for example, via/over the first link. The STA 702 may monitor the same link (e.g., the first link), for example, for an acknowledgment (e.g., ACK) frame from the STA 704.

A STA 704 may be configured to determine whether an error is present in a received portion of the first frame. For example, a STA 704 may be configured to determine whether an error is present in a (e.g., each) received MPDU of data field 710 of PPDU 712. The STA 704 may be configured to determine whether an error is present in a (e.g., each) received MPDU of data field 710 of PPDU 712, for example, as the STA 704 receives data field 710 of PPDU 712. Specifically, the STA 704 may check an MPDU of PPDU 712 for errors, for example, as the MPDU is received. The STA 704 may check whether the MPDU is the last MPDU of PPDU 712, for example, if no error is detected in the MPDU. The STA 704 may be configured to acknowledge a received portion of the first frame. The STA 704 may be configured to acknowledge PPDU 712, for example, if the MPDU is the last MPDU of PPDU 712. The STA 704 may be configured to acknowledge PPDU 712, for example, by sending an acknowledgment via/on the first link. The STA 704 may proceed to decoding and checking the next MPDU, for example, if the MPDU is not the last MPDU of PPDU 712. The STA 704 may be configured to send (e.g., transmit) an acknowledgment (e.g., ACK) frame via/on the first link indicating the error in the MPDU to STA 702, for example, if an error is detected in the MPDU.

In the example 700, a STA 704 may detect an error in an nth MPDU 708 of data field 710 of PPDU 712. The STA 704 may send (e.g., transmit) an acknowledge (e.g., ACK) frame 714 on the first link to STA 702. The STA 704 may proceed to decode the next received MPDU of data field 710 of PPDU 712, for example, after determining that the nth MPDU 708 is not the last MPDU in data field 710 of PPDU 712. The STA 702 monitoring the first link may receive the acknowledge (e.g., ACK) frame 714 from STA 704. The STA 702 may decode the acknowledge (e.g., ACK) frame 714 and/or may determine that the acknowledge (e.g., ACK) frame 714 indicates an error in the nth MPDU 708 of PPDU 712, for example, based on (e.g., on, upon, after) receiving ACK frame 714.

According to at least some wireless operations, in the examples 600 and 700 described herein, the sending (e.g., transmitting) STA (e.g., STA 602 or STA 702) may resend (e.g., retransmit) the PPDU (or a part thereof) to the receiving STA (e.g., STA 604 or STA 704), for example, based on (e.g., after or upon) receiving an acknowledgment frame (e.g., XACK frame 614 or ACK frame 714) indicating an error in the PPDU being sent (e.g., transmitted). Retransmission of PPDU (or a part thereof) may occur over a same link on which the PPDU was sent (e.g., transmitted). Retransmission of PPDU over the same link may result in repeated errors and/or the need for frequent retransmissions, for example, if (e.g., when) a receiving STA is encountering a high level of interference on that link. Receiving STA may encounter a high level of interference on that link, for example, due to a hidden node that a sending (e.g., transmitting) STA is unaware of, and/or due to another wireless technology operating on the same or an adjacent channel.

Examples as will be further described herein may address this problem, for example, by aiding a sending (e.g., transmitting) STA in the selection of a link on which to perform retransmission, for example, in the presence of multiple links between the sending (e.g., transmitting) STA and a receiving STA. The receiving STA may send a message (e.g., an acknowledgement frame) to the sending STA, for example, based on detecting an error in the transmission of a data unit (e.g., PPDU). The message may indicate the error and also one or more links for the retransmission. The one or more links may be determined by the receiving STA, for example, based on results of link measurements (e.g., channel load measurement, noise and interference measurement, etc.). The sending STA may confirm and/or select one link and resend (e.g., retransmit) the data unit via the link. The retransmission may be for the whole data unit or for a portion of the data unit (e.g., the portion with a transmission error), for example, based on characteristics of the error. The sending STA may monitor for the message and may resend the data unit without waiting for the original transmission period of the data unit to expire. The sending STA may resend the data unit concurrently with the original transmission. The sending STA may send a response message (e.g., a response frame), for example, after receiving the acknowledgement frame and before retransmission. The response message may confirm the link via which retransmission will be performed. Examples as described herein may increase efficiency of transmission and/or save energy.

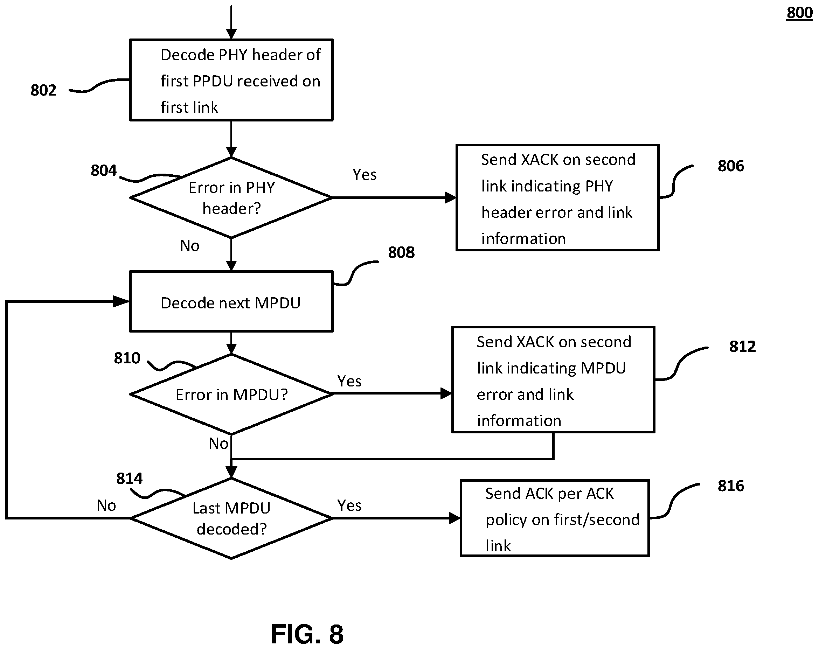

FIG. 8 shows an example method 800. One or more steps of method 800 may be performed by a first STA (e.g., STA or AP) configured to receive a first PPDU from a second STA (e.g., STA or AP). The first STA and the second STA may be communicatively coupled by a plurality of links (e.g., 2.4 GHz, 5 GHz, 60 GHz, etc.). The first PPDU may be received on a first link between the first STA and the second STA. The first PPDU may be, for example, an EHT PPDU as shown by example PPDU 300A or a UHR PPDU as shown by example PPDU 300B as described herein.

As shown in FIG. 8, at step 802, a PHY header of the first PPDU received on a first link may be decoded. As explained herein with reference to FIG. 3A, for a PPDU such as PPDU 300A, the PHY header may comprise an L-SIG, an RL-SIG, a U-SIG, and an EHT-SIG field. For a PPDU such as PPDU 300B as described in FIG. 3B, the PHY header may comprise an L-SIG, an RL-SIG, a U-SIG, a UHR-SIG, and a UHR SIG 2 field.

At step 804, a determination may be made as to whether an error has been detected in the PHY header. For example, for a PPDU such as PPDU 300A, an error in the PHY header may correspond to an error value or a validate value in the U-SIG or the EHT-SIG field of the PPDU. For a PPDU such as PPDU 300B, an error in the PHY header may correspond to an error value or a validate value in the U-SIG or the UHR-SIG field of the PPDU.

If the answer at step 804 is yes, the method 800 may proceed to step 806. At step 806, an acknowledgment (e.g., XACK) frame may be sent, on a second link between the first STA and the second STA, to the second STA. The acknowledgment (e.g., XACK) frame may be sent without waiting for an end of reception of the first PPDU. Reception of the first PPDU on the first link may be stopped. The acknowledgment (e.g., XACK) frame may include an indication that an error in the PHY header of the first PPDU has been detected. The acknowledgment (e.g., XACK) frame may also indicate a third link between the first STA and the second STA. The third link may be a link suggested by the first STA for the second STA to send (e.g., transmit) a second PPDU to the first STA. The second PPDU may be a retransmission of the first PPDU, for example, if an error in the PHY header of the first PPDU is indicated in the acknowledgment (e.g., XACK) frame. The indication of the third link in the acknowledgment (e.g., XACK) frame may allow the second STA to switch seamlessly and/or immediately from transmission of the first PPDU via/on the first link to transmission of the second PPDU via/on the third link.

The first STA may select (or determine) the third link, for example, based on link measurements performed by the first STA. The first STA may perform a link measurement for one or more (e.g., all) links between the first STA and the second STA. The first STA may select the third link, for example, based on the performed link measurements. The link measurement for a link may comprise one or more of: a channel load measurement; an average noise plus interference power indicator (ANIPI) measurement; or a received signal-to-noise indicator (RSNI) measurement. The channel load measurement may be performed according to one or more wireless communication standards, such as section 11.10.9.3 of the IEEE 802.11 standard ("IEEE P802.11-REVme/D2.1, January 2023.") and/or any earlier or later releases and/or versions. The channel load measurement may correspond to the percentage of time that the measuring STA senses the channel/link as busy over a measurement duration. The measuring STA may sense the channel/link as busy, for example, as indicated by either the virtual carrier sense mechanism or the physical carrier sense mechanism over the requested channel width. The ANIPI measurement may be based on a MAC indication of the average noise plus interference power measured on a channel/link that meets the two simultaneous conditions: 1) the STA is not sending (e.g., transmitting) a frame; and 2) the STA is not receiving a frame addressed to it. The RSNI measurement may be based on an indication of the signal-to-noise plus interference ratio of a received frame.

The first STA may perform a link measurement for a plurality of links between the first STA and the second STA. For example, the first STA may perform a channel load measurement for a plurality of links between the first STA and the second STA. For example, the plurality of links may include all links between the first STA and the second STA. The third link may correspond to the link of the plurality of links having the lowest channel load measurement. The third link may be the same as the first link, for example, if the channel load measurement for the first link is lower than a pre-defined threshold.

The first STA may perform a link measurement for a plurality of links between the first STA and the second STA. For example, the first STA may perform an ANIPI measurement for a plurality of links between the first STA and the second STA. For example, the plurality of links may include all links between the first STA and the second STA. The third link may correspond to the link of the plurality of links having the lowest ANIPI measurement. The third link may be the same as the first link, for example, if the ANIPI measurement for the first link is lower than a pre-defined threshold.

The first STA may perform a link measurement for a plurality of links between the first STA and the second STA. For example, the first STA may perform an RSNI measurement for a plurality of links between the first STA and the second STA. The RSNI measurement for a link may be based on a last received frame on the link. For example, for the first link, the RSNI measurement may be based on the frame contained in the first PPDU. For example, the plurality of links may include all links between the first STA and the second STA. The third link may correspond to the link of the plurality of links having the highest RSNI measurement. The third link may be the same as the first link, for example, if the RSNI measurement for the first link (for the first PPDU) is greater than a pre-defined threshold.

The third link may be the same as or different than (or different from) the first link or the second link. The acknowledgment (e.g., XACK) frame may further indicate a fourth link between the first STA and the second STA. The fourth link may be different than the third link. The fourth link may be another link suggested by the first STA for the second STA to send (e.g., transmit) the second PPDU to the first STA. The acknowledgment (e.g., XACK) frame may comprise a link bitmap indicating the third link and/or the fourth link. The acknowledgment (e.g., XACK) frame may comprise an identifier of the third link and/or the fourth link.

If the answer at step 804 is no, the method 800 may proceed to step 808. At step 808, a next MPDU of the first PPDU may be decoded. In a first iteration of method 800, the next MPDU may correspond to a first occurring MPDU in the first PPDU being received. The next MPDU may be decoded, for example, based on information obtained from the PHY header.

At step 810, a determination may be made as to whether an error has been detected in the decoded MPDU. The error may be detected, for example, based on a frame check sequence at the end of the MPDU. If the answer at step 810 is yes, the method 800 may proceed to step 812. At step 812, an acknowledgment (e.g., XACK) frame may be sent, on the second link, with information regarding the MPDU in error. The acknowledgment (e.g., XACK) frame may be sent without waiting for an end of reception of the first PPDU. The acknowledgment (e.g., XACK) frame may also indicate a third link between the first STA and the second STA. The third link may be a link suggested by the first STA for the second STA to send (e.g., transmit) a second PPDU to the first STA. The second PPDU may comprise one or more MPDUs of the first PPDU received in error by the second STA. The indication of the third link in the acknowledgment (e.g., XACK) frame may allow the second STA to start transmission of the second PPDU via/on the third link without waiting for an end of transmission (or immediately after a stop of transmission) of the first PPDU.

The first STA may select the third link, for example, based on link measurements performed by the first STA as described herein. The third link may be the same as or different than the first link or the second link.

The acknowledgment (e.g., XACK) frame may further indicate a fourth link between the first STA and the second STA. The fourth link may be different than the third link. The fourth link may be another link suggested by the first STA for the second STA to send (e.g., transmit) the second PPDU to the first STA.

The acknowledgment (e.g., XACK) frame may comprise a link bitmap indicating the third link and/or the fourth link. The acknowledgment (e.g., XACK) frame may comprise an identifier of the third link and/or the fourth link.

The method 800 may proceed to step 814 as will be described herein, for example, after step 812. Returning to step 810, if the answer at step 810 is no, the method 800 may proceed to step 814. At step 814, a determination may be made as to whether a last MPDU in the PPDU has been decoded. The last MPDU may correspond to a last occurring MPDU in the PPDU. If the answer at step 814 is no, the method 800 may return to step 808. If the answer at step 814 is yes, the method 800 may proceed to step 816. At step 816, an acknowledgment frame may be sent, for example, based on (e.g., in response to) the PPDU according to the at least some ACK policy of the IEEE 802.11 standard. The acknowledgment frame may be sent via/on the first or the second link. The sending of the acknowledgment frame at step 816 may correspond to the PPDU being entirely received by the first STA.

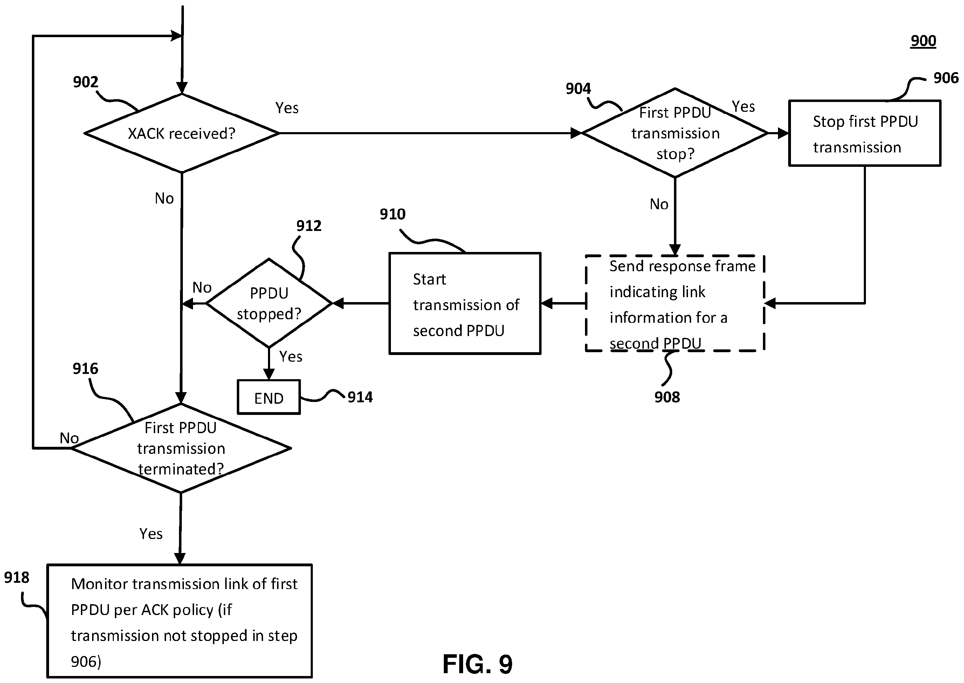

FIG. 9 shows an example method 900. One or more steps of method 900 may be performed by a first STA (e.g., STA or AP) configured to send (e.g., transmit) a first PPDU to a second STA (e.g., STA or AP). The first STA and the second STA may be communicatively coupled by a plurality of links (e.g., 2.4 GHz, 5 GHz, 60 GHz, etc.). The first PPDU may be sent (e.g., transmitted) on a first link between the first STA and the second STA. The first PPDU may be, for example, an EHT PPDU as shown by example PPDU 300A or a UHR PPDU as shown by example PPDU 300B as described herein. One or more steps of method 900 may be performed, for example, as the first STA may send (e.g., transmit) the PPDU to the second STA.

As shown in FIG. 9, at step 902, a second link between the first and the second STA may be monitored for an acknowledgment (e.g., XACK) frame from the second STA, and a determination may be made as to whether an acknowledgment (e.g., XACK) frame from the second STA has been received. The second link may be different than the first link on which the first PPDU is being sent (e.g., transmitted) by the first STA.

The acknowledgment (e.g., XACK) frame may include an indication that an error in the PHY header of the PPDU has been detected by the second STA or information regarding an MPDU of the first PPDU received in error by the second STA. The acknowledgment (e.g., XACK) frame may also indicate a third link between the first STA and the second STA. The third link may be a link suggested by the second STA for the first STA to send (e.g., transmit) a second PPDU to the second STA. The second PPDU may be a retransmission of the first PPDU, for example, if an error in the PHY header of the first PPDU is indicated in the acknowledgment (e.g., XACK) frame. The second PPDU may comprise one or more MPDUs of the first PPDU received in error by the second STA.

The first STA may select the third link, for example, based on link measurements performed by the first STA as described herein. The third link may be the same as or different than the first link or the second link.

The acknowledgment (e.g., XACK) frame may further indicate a fourth link between the first STA and the second STA. The fourth link may be different than the third link. The fourth link may be another link suggested by the second STA for the first STA to send (e.g., transmit) the second PPDU to the first STA. The acknowledgment (e.g., XACK) frame may comprise a link bitmap indicating the third link and/or the fourth link. The acknowledgment (e.g., XACK) frame may comprise an identifier of the third link and/or the fourth link.

If the answer at step 902 is yes, the method 900 may proceed to step 904. At step 904, a determination may be made as to whether the received acknowledgment (e.g., XACK) frame indicates that transmission of the first PPDU should be stopped. Transmission of the first PPDU may be stopped, for example, if the acknowledgment (e.g., XACK) frame from the second STA indicates detection of an error in a PHY header of the first PPDU, which may prevent the second STA from decoding the first PPDU. If the answer at step 904 is yes, the method 900 may proceed to step 906. At step 906, transmission of the first PPDU may be stopped, for example, before proceeding to an optional step 908 or directly to step 910. If the answer at step 904 is no, the method 900 may proceed to an optional step 908 or directly to step 910.

At step 908, a response frame to the acknowledgment (e.g., XACK) frame received on the second link may be sent to the second STA. The response frame may be sent on the second link. The response may confirm a link indicated in the acknowledgment (e.g., XACK) frame or may select one of a plurality of (e.g., two or more) links indicated in the acknowledgment (e.g., XACK) frame. The response frame may confirm an indicated link for transmission of the second PPDU, for example, if the acknowledgment (e.g., XACK) frame indicates the link (e.g., a single link) for transmission of the second PPDU. The response frame may indicate one of a plurality of links for transmission of the second PPDU, for example, if the acknowledgment (e.g., XACK) frame indicates the plurality of links for transmission of the second PPDU.

As mentioned herein, step 908 may be optional. The second PPDU may be sent (e.g., transmitted) by the first STA on the same link on which the acknowledgment (e.g., XACK) frame is received by the first STA, for example, if the method 900 may not include a step 908.

At step 910, the transmission of the second PPDU may be started. As described herein, the second PPDU may be sent on the same link on which the acknowledgment (e.g., XACK) frame is received or on a link indicated in the response frame at step 908.

The method 900 may proceed to step 912. At step 912, a determination may be made as to whether transmission of the first PPDU has been stopped at step 906. If the answer at step 912 is yes, the method 900 may proceed to step 914, in which the method 900 ends. If the answer at step 912 is no, the method 900 may proceed to step 916.

At step 916, a determination may be made as to whether the transmission of the first PPDU is terminated (all MPDUs sent (e.g., transmitted)). If the answer at step 916 is no, the method 900 may return to step 902 as described herein. If the answer at step 916 is yes, the method 900 may proceed to step 918. At step 918, the first link may be monitored for an acknowledgment frame from the second STA according to at least some ACK policy of the IEEE 802.11 standard. The acknowledgment frame, like the XACK, may be sent on the second link by the second STA. At step 918, the second link may be monitored for the acknowledgment frame from the second STA. The receiving of an acknowledgment frame at step 918 may correspond to the PPDU being entirely received by the second STA.

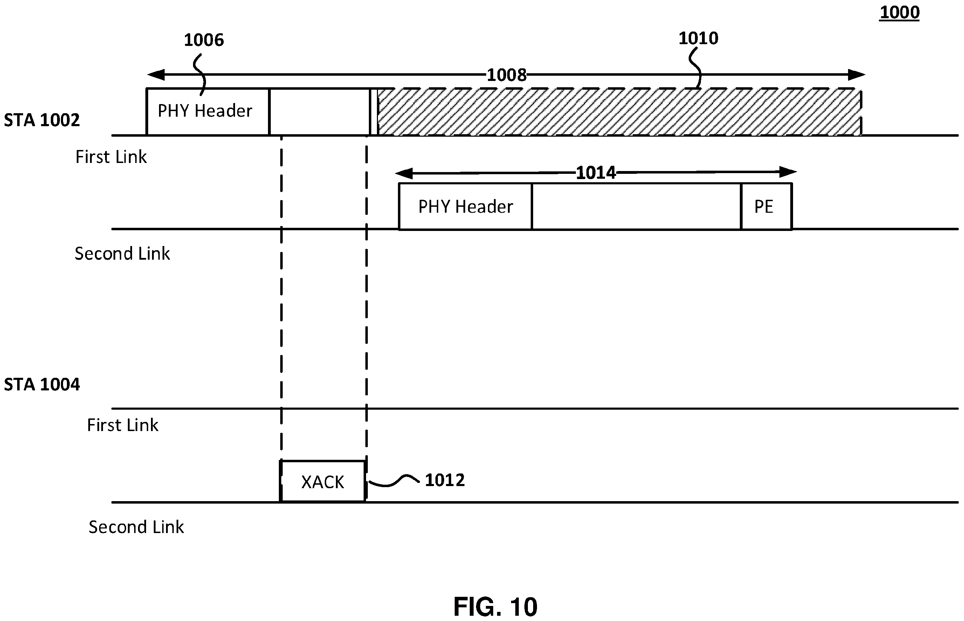

FIG. 10 shows an example operation. As shown in FIG. 10, an example 1000 may include a STA 1002 and a STA 1004. STAs 1002 and 1004 may be communicatively coupled by a first link and a second link. The first and second links may correspond to different frequency bands (e.g., 2.4 GHz, 5 GHz, 60 GHz, etc.). The first and second links may correspond to a same frequency band (e.g., 2.4 GHz, 5 GHz, 60 GHz, etc.). STAs 1002 and 1004 may each comprise a STA or an AP.

A STA 1002 may send (e.g., transmit) a first frame to a STA 1004, for example, via a first link. In the example 1000, a STA 1002 may send (e.g., is sending/transmitting) a PPDU 1008 to a STA 1004, for example, via/on the first link. The PPDU 1008 may comprise a preamble (not shown in FIG. 10), a PHY header 1006, a data field, and optionally a PE field. The PPDU 1008 may be, for example, an EHT PPDU as shown by an example PPDU 300A or a UHR PPDU as shown by an example PPDU 300B as described herein.

A STA 1004 may receive a PPDU 1008, for example, via/over the first link. A STA 1004 may decode a PHY header 1006 of the PPDU 1008. A STA 1004 may be configured to send (e.g., transmit) an acknowledgment (e.g., XACK) frame, via/on the second link, to STA 1002, for example, based on (e.g., on, upon, after) detecting an error in the PHY header of PPDU 1008. A STA 1004 may, additionally or alternatively, be configured to send (e.g., transmit) an acknowledgment (e.g., XACK) frame on the second link to STA 1002, for example, based on (e.g., on, upon, after) detecting an error in an MPDU of the PPDU 1008.

In the example 1000, a STA 1004 may detect an error in the PHY header of PPDU 1008. The STA 1004 may send (e.g., transmit) an acknowledgment (e.g., XACK) frame 1012 via/on the second link to STA 1002. The acknowledgment (e.g., XACK) frame 1012 may include an indication that an error in the PHY header of PPDU 1008 has been detected. The acknowledgment (e.g., XACK) frame 1012 may also indicate a third link between the STA 1002 and the STA 1004. The third link may be a link suggested by the STA 1004 for the STA 1002 to send (e.g., transmit) a subsequent PPDU to the STA 1004. The subsequent PPDU may be a retransmission of PPDU 1008, for example, if an error in the PHY header of PPDU 1008 is indicated in the acknowledgment (e.g., XACK) frame 1012. Alternatively, the subsequent PPDU may comprise one or more MPDUs of PPDU 1008 received in error by the STA 1004.

A STA 1004 may select the third link, for example, based on link measurements performed by the first STA as described herein. The third link may be the same as or different than the first link or the second link between STA 1002 and STA 1004.

A STA 1002 may stop sending (e.g., transmitting) PPDU 1008, for example, based on (e.g., on, upon, after) receiving acknowledgment (e.g., XACK) frame 1012 via/on the second link. As shown in FIG. 10, a portion 1010 (comprising one or more MPDUs) of PPDU 1008 may not be sent (e.g., transmitted) to STA 1004. A STA 1002 may send (e.g., transmit) a PPDU 1014 to STA 1004, for example, based on (e.g., immediately after) stopping the transmission of PPDU 1008. The immediate transmission of PPDU 1014 may be enabled by the indication of the third link in the acknowledgment (e.g., XACK) frame 1012. The third link may be the same as the second link, and the STA 1002 may send (e.g., transmit) PPDU 1014 via/on the second link. A PPDU 1014 may comprise all of the MPDUs of PPDU 1008, for example, based on acknowledgment (e.g., XACK) frame 1012 indicating an error in the PHY header of PPDU 1008. That is, PPDU 1014 may be considered a retransmission of PPDU 1008 (even though PPDU 1008 is not fully sent (e.g., transmitted) in example 1000).

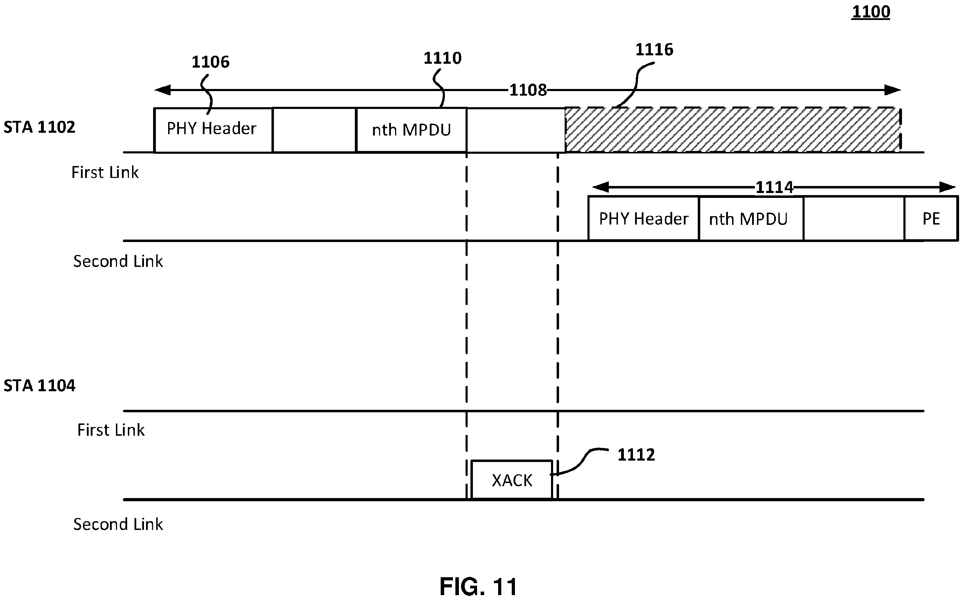

FIG. 11 shows an example operation. As shown in FIG. 11, an example 1100 may include a STA 1102 and a STA 1104. STAs 1102 and 1104 may be communicatively coupled by a first link and a second link. The first and second links may correspond to different frequency bands (e.g., 2.4 GHz, 5 GHz, 60 GHz, etc.). The first and second links may correspond to a same frequency band (e.g., 2.4 GHz, 5 GHz, 60 GHz, etc.). STAs 1102 and 1104 may each comprise a STA or an AP.

A STA 1102 may send (e.g., transmit) a first frame to a STA 1104, for example, via a first link. In the example 1100, a STA 1102 may send (e.g., is sending\transmitting) a PPDU 1108 to a STA 1104, for example, via/on the first link. The PPDU 1108 may comprise a preamble (not shown in FIG. 11), a PHY header 1106, a data field (comprising one or more MPDUs), and optionally a PE field. The PPDU 1108 may be, for example, an EHT PPDU as shown by an example PPDU 300A or a UHR PPDU as shown by an example PPDU 300B as described herein.

A STA 1104 may receive a PPDU 1108, for example, via/over the first link. A STA 1104 may decode a PHY header 1106 of the PPDU 1108. A STA 1104 may be configured to send (e.g., transmit) an acknowledgment (e.g., XACK) frame via/on the second link to STA 1102, for example, based on (e.g., on, upon, after) detecting an error in the PHY header of PPDU 1108. A STA 1104 may, additionally or alternatively, be configured to send (e.g., transmit) an acknowledgment (e.g., XACK) frame via/on the second link to STA 1102, for example, based on (e.g., on, upon, after) detecting an error in an MPDU of PPDU 1108.

In the example 1100, a STA 1104 may decode (e.g., successfully decode) a PHY header 1106 of PPDU 1108. The STA 1104 may proceed to decode the data field of PPDU 1108, for example, based on (e.g., on, upon, after) successfully decoding PHY header 1106. Decoding the data field of PPDU 1108 may start with a first MPDU of PPDU 1108. In the example 1100, the STA 1104 may detect an error in an nth MPDU 1110 of PPDU 1108 and may send (e.g., transmit) an acknowledgment (e.g., XACK) frame 1112, via/on the second link, to STA 1102, for example, based on (e.g., on, upon, after) detecting the error in nth MPDU 1110.

An acknowledgment (e.g., XACK) frame 1112 may include an indication of nth MPDU 1110 received in error by STA 1104. The acknowledgment (e.g., XACK) frame 1112 may also indicate a third link between STA 1102 and STA 1104. The third link may be a link suggested by STA 1104 for STA 1102 to send (e.g., transmit) a subsequent PPDU to STA 1104. The subsequent PPDU may be a retransmission of PPDU 1108, for example, if an error in the PHY header of PPDU 1108 is indicated in the acknowledgment (e.g., XACK) frame 1112. Alternatively, the subsequent PPDU may comprise one or more MPDUs of PPDU 1108 received in error by STA 1104.

A STA 1104 may select the third link, for example, based on link measurements performed by the first STA as described herein. The third link may be the same as or different than the first link or the second link between STA 1102 and STA 1104.

A STA 1102 may stop sending (e.g., transmitting) PPDU 1108, for example, based on (e.g., on, upon, after) receiving an acknowledgment (e.g., XACK) frame 1112 on the second link. As shown in FIG. 11, a portion 1116 (comprising one or more MPDUs) of PPDU 1108 may not be sent (e.g., transmitted) to a STA 1104. The STA 1102 may send (e.g., transmit) a PPDU 1114 to STA 1104, for example, based on (e.g., immediately after) stopping the transmission of PPDU 1108. The immediate transmission of the PPDU 1114 may be enabled by the indication of the third link in the acknowledgment (e.g., XACK) frame 1112. The third link may be the same as the second link, and the PPDU 1114 may be sent (e.g., transmitted) on the second link. A PPDU 1114 may comprise nth MPDU 1110 (and any remaining MPDUs) of PPDU 1108, for example, based on acknowledgment (e.g., XACK) frame 1112 indicating an error in nth MPDU 1110 of PPDU 1108.

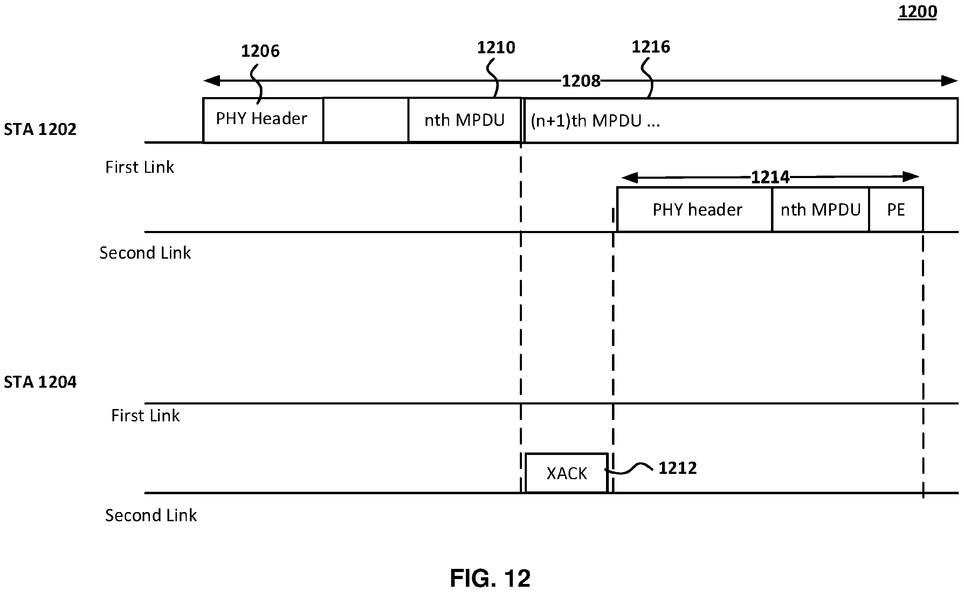

FIG. 12 shows another example operation. As shown in FIG. 12, an example 1200 may include a STA 1202 and a STA 1204. STAs 1202 and 1204 may be communicatively coupled by a first link and a second link. The first and second links may correspond to different frequency bands (e.g., 2.4 GHz, 5 GHz, 60 GHz, etc.). The first and second links may correspond to a same frequency band (e.g., 2.4 GHz, 5 GHz, 60 GHz, etc.). STAs 1202 and 1204 may each comprise a STA or an AP.

A STA 1202 may send (e.g., transmit) a first frame to a STA 1204, for example, via a first link. In the example 1200, a STA 1202 may send (e.g., is sending\transmitting) a PPDU 1208 to STA 1204. The PPDU 1208 may comprise a preamble (not shown in FIG. 12), a PHY header 1206, a data field (comprising one or more MPDUs), and optionally a PE field. The PPDU 1208 may be, for example, an EHT PPDU as shown by an example PPDU 300A or a UHR PPDU as shown by an example PPDU 300B as described herein.

A STA 1204 may receive a PPDU 1208, for example, via/over the first link. A STA 1204 may decode a PHY header 1206 of a PPDU 1208. A STA 1204 may be configured to send (e.g., transmit) an acknowledgment (e.g., XACK) frame via/on the second link to STA 1202, for example, based on (e.g., on, upon, after) detecting an error in the PHY header of PPDU 1108. A STA 1204 may, additionally or alternatively, be configured to send (e.g., transmit) an acknowledgment (e.g., XACK) frame via/on the second link to the STA 1202, for example, based on (e.g., on, upon, after) detecting an error in an MPDU of PPDU 1208.

In the example 1200, a STA 1204 may decode (e.g., successfully decode) a PHY header 1206 of a PPDU 1208. The STA 1204 may proceed to decode the data field of PPDU 1208, for example, based on (e.g., on, upon, after) successfully decoding the PHY header 1206. Decoding the data field of PPDU 1208 may start with a first MPDU of the PPDU 1208. In the example 1200, the STA 1204 may detect an error in an nth MPDU 1210 of PPDU 1208 and may send (e.g., transmit) an acknowledgment (e.g., XACK) frame 1212 via/on the second link to STA 1202, for example, based on (e.g., on, upon, after) detecting the error in nth MPDU 1210.

An acknowledgment (e.g., XACK) frame 1212 may include an indication of nth MPDU 1210 received in error by a STA 1204. The acknowledgment (e.g., XACK) frame 1212 may also indicate a third link between STA 1202 and STA 1204. The third link may be a link suggested by the STA 1204 for the STA 1202 to send (e.g., transmit) a subsequent PPDU to the STA 1204. The subsequent PPDU may be a retransmission of PPDU 1208, for example, if an error in the PHY header of the PPDU 1208 is indicated in the acknowledgment (e.g., XACK) frame 1212. Alternatively, the subsequent PPDU may comprise one or more MPDUs of PPDU 1208 received in error by the STA 1204.

A STA 1204 may select the third link, for example, based on link measurements performed by the first STA as described herein. The third link may be the same as or different than the first link or the second link between STA 1202 and STA 1204.

A STA 1202 may continue sending (e.g., transmitting) a PPDU 1208, for example, via/on the first link. A STA 1202 may continue sending (e.g., transmitting) a PPDU 1208, for example, based on (e.g., on, upon, after) receiving an acknowledgment (e.g., XACK) frame 1212 via/on the second link. As shown in FIG. 12, the STA 1202 may continue sending (e.g., transmitting) a portion 1216 of the PPDU 1208 comprising at least an (n+1)th MPDU of PPDU 1208 via/on the first link. A STA 1202 may send (e.g., transmit) a PPDU 1214, for example, concurrently with sending (e.g., transmitting) the portion 1216 via/on the first link. The STA 1202 may send (e.g., transmit) a PPDU 1214, for example, based on (e.g., on, upon, after) receiving the acknowledgment (e.g., XACK) frame 1212. The third link may be the same as the second link, and the PPDU 1214 may be sent (e.g., transmitted) on the second link by the STA 1202. The PPDU 1214 may comprise nth MPDU 1210 of PPDU 1208, for example, based on the acknowledgment (e.g., XACK) frame 1212 indicating an error in nth MPDU 1210 of PPDU 1208.

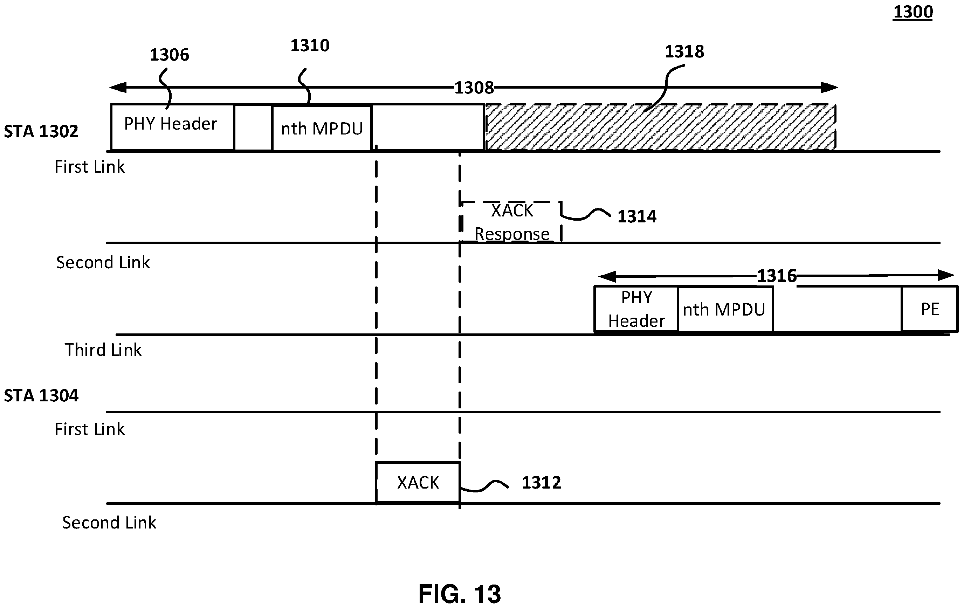

FIG. 13 shows another example operation. As shown in FIG. 13, an example 1300 may include a STA 1302 and a STA 1304. STAs 1302 and 1304 may be communicatively coupled by a first link and a second link. The first and second links may correspond to different frequency bands (e.g., 2.4 GHz, 5 GHz, 60 GHz, etc.). The first and second links may correspond to a same frequency band (e.g., 2.4 GHz, 5 GHz, 60 GHz, etc.). STAs 1302 and 1304 may each comprise a STA or an AP.

A STA 1302 may send (e.g., transmit) a first frame to a STA 1304, for example, via a first link. In an example 1300, a STA 1302 may send (e.g., is sending\transmitting) a PPDU 1308 to a STA 1304, for example, via/on the first link. The PPDU 1308 may comprise a preamble (not shown in FIG. 13), a PHY header 1306, a data field (comprising one or more MPDUs), and optionally a PE field. The PPDU 1308 may be, for example, an EHT PPDU as shown by an example PPDU 300A or a UHR PPDU as shown by an example PPDU 300B as described herein.

A STA 1304 may receive a PPDU 1308, for example, via/over the first link. A STA 1304 may decode a PHY header 1306 of the PPDU 1308. A STA 1304 may be configured to send (e.g., transmit) an acknowledgment (e.g., XACK) frame, via/on the second link, to a STA 1302, for example, based on (e.g., on, upon, after) detecting an error in the PHY header of PPDU 1308. A STA 1304 may, additionally or alternatively, be configured to send (e.g., transmit) an acknowledgment (e.g., XACK) frame, via/on the second link, to STA 1302, for example, based on (e.g., on, upon, after) detecting an error in an MPDU of PPDU 1308.

In the example 1300, a STA 1304 may decode (e.g., successfully decode) a PHY header 1306 of PPDU 1308. The STA 1304 may proceed to decode the data field of PPDU 1308, for example, based on (e.g., on, upon, after) successfully decoding PHY header 1306. Decoding the data field of PPDU 1308 may start with a first MPDU of PPDU 1308. In the example 1300, the STA 1304 may detect an error in an nth MPDU 1310 of PPDU 1308 and may send (e.g., transmit) an acknowledgment (e.g., XACK) frame 1312 on the second link to STA 1302, for example, based on (e.g., on, upon, after) detecting the error in nth MPDU 1310.

An acknowledgment (e.g., XACK) frame 1312 may include an indication of nth MPDU 1310 received in error by STA 1304. The acknowledgment (e.g., XACK) frame 1312 may also indicate a third link between STA 1302 and STA 1304. The third link may be a link suggested by STA 1304 for STA 1302 to send (e.g., transmit) a subsequent PPDU to STA 1304. The subsequent PPDU may be a retransmission of PPDU 1308, for example, if an error in the PHY header of PPDU 1308 is indicated in acknowledgment (e.g., XACK) frame 1312. Alternatively, the subsequent PPDU may comprise one or more MPDUs of PPDU 1308 received in error by STA 1304.

A STA 1304 may select the third link, for example, based on link measurements performed by the first STA as described herein. The third link may be the same as or different than the first link or the second link between STA 1302 and STA 1304.

A STA 1302 may stop sending (e.g., transmitting) PPDU 1308, for example, based on (e.g., on, upon, after) receiving acknowledgment (e.g., XACK) frame 1312 on the second link. As shown in FIG. 13, a portion 1318 (comprising one or more MPDUs) of PPDU 1308 may not be sent (e.g., transmitted) to STA 1304. The STA 1302 may send (e.g., transmit) a response frame 1314 via/on the second link to STA 1304, for example, based on (e.g., on, upon, after) receiving the acknowledgment (e.g., XACK) frame 1312. Response frame 1314 may indicate the third link on which STA 1302 may intend to send (e.g., transmit) the subsequent PPDU to the STA 1304. A response frame 1314 may confirm the third link indicated in the acknowledgment (e.g., XACK) frame 1312 or may select one of a plurality of links indicated in the acknowledgment (e.g., XACK) frame 1312. A response frame 1314 may confirm the indicated link for transmission of the subsequent PPDU, for example, if the acknowledgment (e.g., XACK) frame 1312 indicates a single link for transmission of the subsequent PPDU. A response frame 1314 may indicate one of the plurality of links for transmission of the subsequent PPDU, for example, if acknowledgment (e.g., XACK) frame 1312 indicates a plurality of links for transmission of the subsequent PPDU.

A STA 1302 may send (e.g., transmit) a response frame 1314 via/on the second link, for example, after stopping transmission of PPDU 1308 via/on the first link. As shown in FIG. 13, a STA 1302 may begin sending (e.g., transmitting) response frame 1314 via/on the second link, for example, before STA 1302 has stopped transmission of PPDU 1308 via/on the first link. The STA 1304 may start monitoring the third link to receive the subsequent PPDU, for example, based on (e.g., on, upon, after) receiving the response frame 1314.

A STA 1302 may begin sending (e.g., transmitting) a PPDU 1316 via/on the third link to STA 1304, for example, after sending (e.g., transmitting) response frame 1314. As shown in FIG. 13, the third link may be different than the first link or the second link. A PPDU 1316 may comprise nth MPDU 1310 (and any remaining MPDUs) of PPDU 1308, for example, based on acknowledgment (e.g., XACK) frame 1312 indicating an error in nth MPDU 1310 of PPDU 1308.

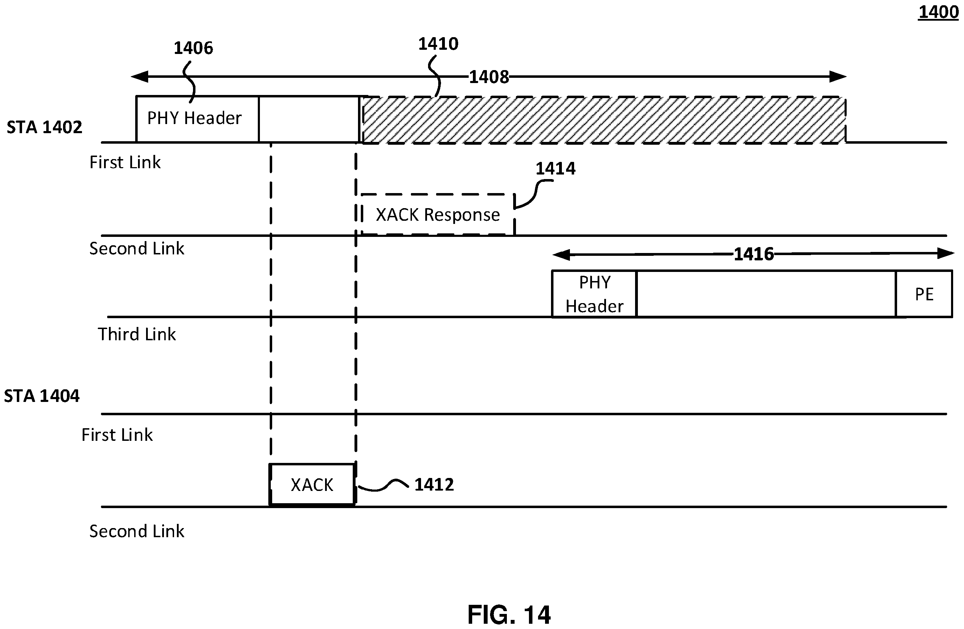

FIG. 14 shows another example operation. As shown in FIG. 14, an example 1400 may include a STA 1402 and a STA 1404. STAs 1402 and 1404 may be communicatively coupled by a first link and a second link. The first and second links may correspond to different frequency bands (e.g., 2.4 GHz, 5 GHz, 60 GHz, etc.). The first and second links may correspond to a same frequency band (e.g., 2.4 GHz, 5 GHz, 60 GHz, etc.). STAs 1402 and 1404 may each comprise a STA or an AP.

A STA 1402 may send (e.g., transmit) a first frame to a STA 1404, for example, via a first link. In an example 1400, a STA 1402 may send (e.g., is sending\transmitting) a PPDU 1408 to a STA 1404, for example, via/on the first link. The PPDU 1408 may comprise a preamble (not shown in FIG. 10), a PHY header 1006, a data field (comprising one or more MPDUs), and optionally a PE field. The PPDU 1408 may be, for example, an EHT PPDU as shown by an example PPDU 300A or a UHR PPDU as shown by an example PPDU 300B as described herein.

A STA 1404 may receive a PPDU 1408, for example, via/over the first link. A STA 1404 may decode a PHY header 1406 of the PPDU 1408. A STA 1404 may be configured to send (e.g., transmit) an acknowledgment (e.g., XACK) frame on the second link to a STA 1402, for example, based on (e.g., on, upon, after) detecting an error in the PHY header of PPDU 1408. A STA 1404 may, additionally or alternatively, be configured to send (e.g., transmit) an acknowledgment (e.g., XACK) frame via/on the second link to the STA 1402, for example, based on (e.g., on, upon, after) detecting an error in an MPDU of PPDU 1408.

In the example 1400, a STA 1404 may detect an error in the PHY header of PPDU 1408. The STA 1404 may send (e.g., transmit) an acknowledgment (e.g., XACK) frame 1412, for example, via/on the second link, to STA 1402. The acknowledgment (e.g., XACK) frame 1412 may include an indication that an error in the PHY header of PPDU 1408 has been detected. The acknowledgment (e.g., XACK) frame 1412 may also indicate a third link between the STA 1402 and the STA 1404. The third link may be a link suggested by the STA 1404 for the STA 1402 to send (e.g., transmit) a subsequent PPDU to the STA 1404. The subsequent PPDU may be a retransmission of the PPDU 1408, for example, if an error in the PHY header of PPDU 1408 is indicated in the acknowledgment (e.g., XACK) frame 1412. Alternatively, the subsequent PPDU may comprise one or more MPDUs of PPDU 1408 received in error by STA 1404.

A STA 1404 may select the third link, for example, based on link measurements performed by the first STA as described herein. The third link may be the same as or different than the first link or the second link between STA 1402 and STA 1404.

A STA 1402 may stop sending (e.g., transmitting) PPDU 1408, for example, based on (e.g., on, upon, after) receiving acknowledgment (e.g., XACK) frame 1412 via/on the second link. As shown in FIG. 14, a portion 1410 (comprising one or more MPDUs) of PPDU 1408 may not be sent (e.g., transmitted) to STA 1404. A STA 1402 may send (e.g., transmit) a response frame 1414 via/on the second link to STA 1404, for example, based on (e.g., on, upon, after) receiving acknowledgment (e.g., XACK) frame 1412. Response frame 1414 may indicate the third link on which STA 1402 may intend to send (e.g., transmit) the subsequent PPDU to STA 1404. A response frame 1414 may confirm the third link indicated in acknowledgment (e.g., XACK) frame 1412 or may select one of a plurality of links indicated in acknowledgment (e.g., XACK) frame 1412. A response frame 1414 may confirm the indicated link for transmission of the subsequent PPDU, for example, if the acknowledgment (e.g., XACK) frame 1412 indicates a single link for transmission of the subsequent PPDU. A response frame 1414 may indicate one of the plurality of links for transmission of the subsequent PPDU, for example, if the acknowledgment (e.g., XACK) frame 1412 indicates a plurality of links for transmission of the subsequent PPDU.

As shown in FIG. 14, a STA 1402 may send (e.g., transmit) a response frame 1414 on the second link, for example, after stopping transmission of PPDU 1408 via/on the first link. A STA 1404 may start monitoring the third link to receive the subsequent PPDU, for example, based on (e.g., on, upon, after) receiving response frame 1414.

A STA 1402 may begin sending (e.g., transmitting) a PPDU 1416 via/on the third link to STA 1404, for example, after sending (e.g., transmitting) response frame 1414. As shown in FIG. 14, the third link may be different than the first link or the second link. A PPDU 1416 may comprise all of the MPDUs of PPDU 1408, for example, based on the acknowledgment (e.g., XACK) frame 1412 indicating an error in the PHY header of PPDU 1408. That is, PPDU 1416 may be considered a retransmission of PPDU 1408 (even though PPDU 1408 is not fully sent (e.g., transmitted) in example 1400).

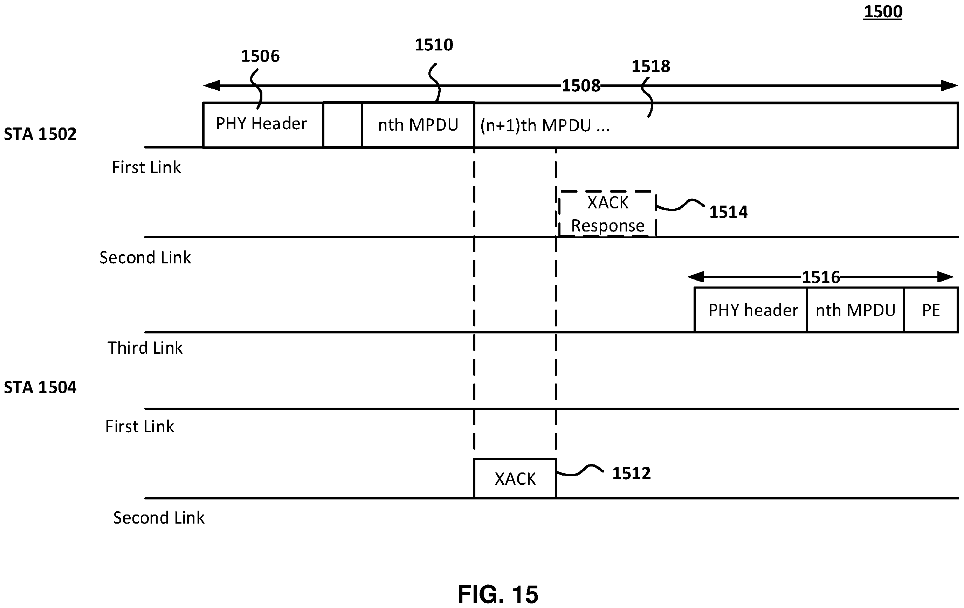

FIG. 15 shows another example operation. As shown in FIG. 15, an example 1500 may include a STA 1502 and a STA 1504. STAs 1502 and 1504 may be communicatively coupled by a first link and a second link. The first and second links may correspond to different frequency bands (e.g., 2.4 GHz, 5 GHz, 60 GHz, etc.). The first and second links may correspond to a same frequency band (e.g., 2.4 GHz, 5 GHz, 60 GHz, etc.). STAs 1502 and 1504 may each comprise a STA or an AP.

A STA 1502 may send (e.g., transmit) a first frame to a STA 1504, for example, via a first link. In an example 1500, a STA 1502 may send (e.g., is sending\transmitting) a PPDU 1508 to a STA 1504. The PPDU 1508 may comprise a preamble (not shown in FIG. 15), a PHY header 1506, a data field (comprising one or more MPDUs), and optionally a PE field. The PPDU 1508 may be, for example, an EHT PPDU as shown by an example PPDU 300A or a UHR PPDU as shown by an example PPDU 300B as described herein.

A STA 1504 may receive a PPDU 1508, for example, via/over the first link. A STA 1504 may decode a PHY header 1506 of the PPDU 1508. A STA 1504 may be configured to send (e.g., transmit) an acknowledgment (e.g., XACK) frame, via/on the second link, to STA 1502, for example, based on (e.g., on, upon, after) detecting an error in the PHY header of PPDU 1508. A STA 1504 may, additionally or alternatively, be configured to send (e.g., transmit) an acknowledgment (e.g., XACK) frame via/on the second link to STA 1502, for example, based on (e.g., on, upon, after) detecting an error in an MPDU of PPDU 1508.

In the example 1500, a STA 1504 may decode (e.g., successfully decode) a PHY header 1506 of PPDU 1508. The STA 1504 may proceed to decode the data field of PPDU 1508, for example, based on (e.g., on, upon, after) successfully decoding PHY header 1506. Decoding the data field of PPDU 1508 may start with a first MPDU of PPDU 1508. In the example 1500, the STA 1504 may detect an error in an nth MPDU 1510 of PPDU 1508 and may send (e.g., transmit) an acknowledgment (e.g., XACK 1512) frame, via/on the second link, to STA 1502, for example, based on (e.g., on, upon, after) detecting the error in nth MPDU 1510.

An acknowledgment (e.g., XACK 1512) frame may include an indication of nth MPDU 1510 received in error by STA 1504. The acknowledgment (e.g., XACK 1512) frame may also indicate a third link between STA 1502 and STA 1504. The third link may be a link suggested by STA 1504 for STA 1502 to send (e.g., transmit) a subsequent PPDU to STA 1504. The subsequent PPDU may be a retransmission of PPDU 1508, for example, if an error in the PHY header of PPDU 1508 is indicated in acknowledgment (e.g., XACK 1512) frame. Alternatively, the subsequent PPDU may comprise one or more MPDUs of PPDU 1508 received in error by STA 1504.

A STA 1504 may select the third link, for example, based on link measurements performed by the first STA as described herein. The third link may be the same as or different than the first link or the second link between STA 1502 and STA 1504.

A STA 1502 may continue sending (e.g., transmitting) PPDU 1508 on the first link, for example, based on (e.g., on, upon, after) receiving acknowledgment (e.g., XACK 1512) frame on the second link. As shown in FIG. 15, the STA 1502 may continue sending (e.g., transmitting) a portion 1518 of PPDU 1508 comprising at least an (n+1)th MPDU of PPDU 1508 via/on the first link.

A STA 1502 may send (e.g., transmit) a response frame 1514, via/on the second link, to STA 1504, for example, concurrently with sending (e.g., transmitting) portion 1518 via/on the first link. The STA 1502 may send (e.g., transmit) a response frame 1514 via/on the second link to STA 1504, for example, based on (e.g., on, upon, after) receiving acknowledgment (e.g., XACK 1512) frame. Response frame 1514 may indicate the third link on which STA 1502 may intend to send (e.g., transmit) the subsequent PPDU to STA 1504. A response frame 1514 may confirm the third link indicated in the acknowledgment (e.g., XACK 1512) frame or may select one of a plurality of links indicated in the acknowledgment (e.g., XACK 1512) frame. A response frame 1514 may confirm the indicated link for transmission of the subsequent PPDU, for example, if the acknowledgment (e.g., XACK 1512) frame indicates a single link for transmission of the subsequent PPDU. A response frame 1514 may indicate one of the plurality of links for transmission of the subsequent PPDU, for example, if the acknowledgment (e.g., XACK 1512) frame indicates a plurality of links for transmission of the subsequent PPDU. The STA 1504 may start monitoring the third link to receive the subsequent PPDU, for example, based on (e.g., on, upon, after) receiving response frame 1514.

A STA 1502 may begin sending (e.g., transmitting) a PPDU 1516, via/on the third link, to STA 1404, for example, after sending (e.g., transmitting) response frame 1514 on the second link. A shown in FIG. 15, the third link may be different than the first link or the second link. PPDU 1516 may comprise nth MPDU 1510 of PPDU 1508, for example, based on acknowledgment (e.g., XACK) frame 1512 indicating an error in nth MPDU 1510 of PPDU 1508.

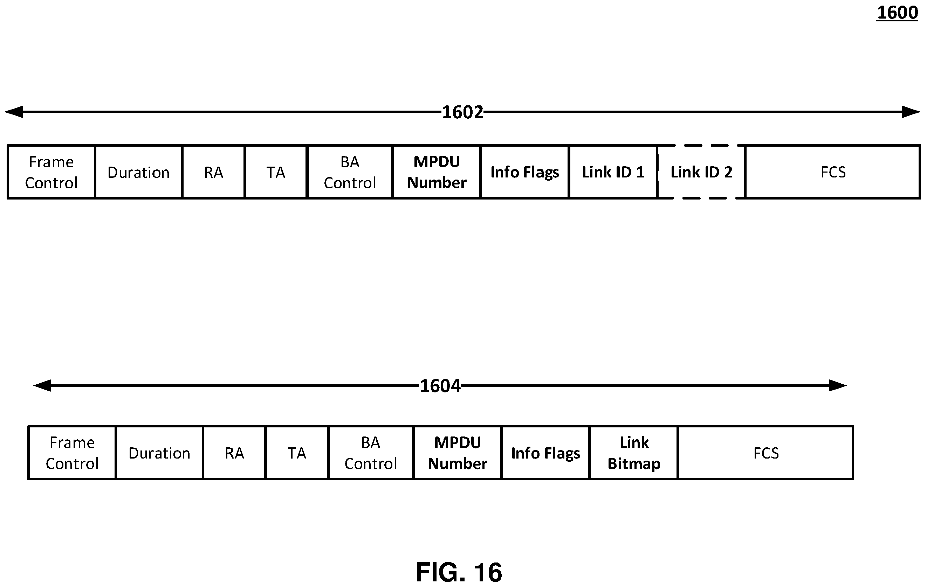

FIG. 16 shows example acknowledgment frames. Example acknowledgment frames 1602 and 1604 may be ACK or XACK frames. Example acknowledgment frames 1602 and 1604 may be sent (e.g., transmitted) by a first STA (AP STA or non-AP STA), for example, based on (e.g., in response to) a first PPDU received from a second STA. As described herein, acknowledgment frames 1602 and 1604 may be sent (e.g., transmitted) by the first STA, for example, based on (e.g., on, upon, after) detecting an error in a PHY header and/or in an MPDU of the first PPDU being received from the second STA.

As shown in FIG. 16, example acknowledgment frame 1602 may include a Frame Control field, a Duration field, a Receiver Address (RA) field, a Transmitter Address (TA) field, a Block Ack (BA) Control field, an MPDU Number field, an Info Flags field, one or more Link ID fields, and a Frame Check Sequence (FCS) field. The Frame Control field may include the following subfields: Protocol Version, Type, Subtype, To DS, From DS, More Fragments, Retry, Power Management, More Data, Protected Frame, and +HTC. The protocol version subfield may be invariant in size and placement across all revisions of the IEEE 802.11 standard. The Duration field may contain a duration value (e.g., in microseconds) which may be used by a recipient to update a network allocation vector (NAV). The NAV may be a counter that may indicate to a STA an amount of time during which the STA must defer from accessing the shared medium. The RA field may provide the MAC address of the intended receiver STA of the frame. The TA field may provide the MAC address of the sending (e.g., transmitting) STA of the frame.

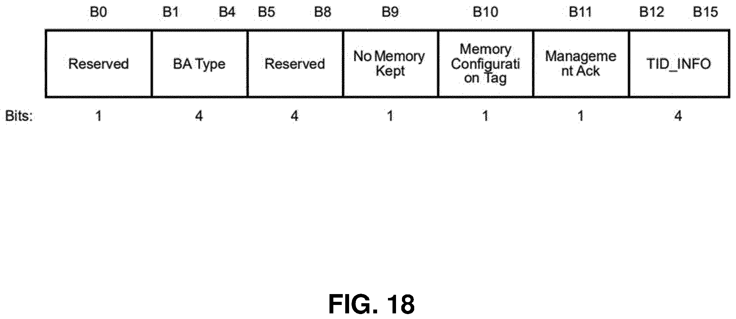

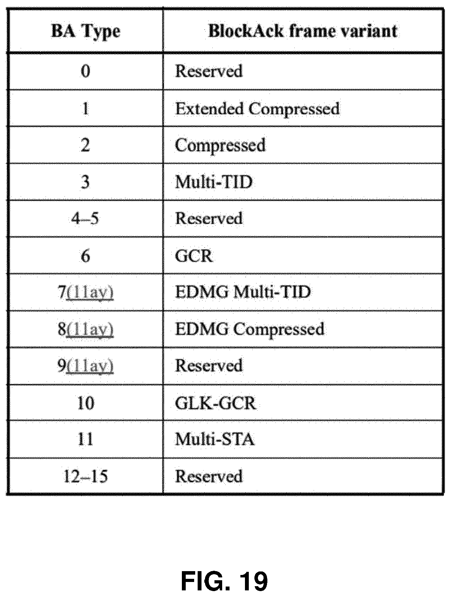

The BA Control field may have a format as shown in FIG. 18. The BA Type subfield of the BA Control field may indicate the BlockAck frame variant of acknowledgment frame 1602. The BA Type subfield may use an encoding as shown in FIG. 19. One of the reserved values of the BA Type subfield (e.g., 0, 4-5, or 12-15, etc.) may be used to indicate whether acknowledgment frame 1602 is an XACK frame or an ACK.

The MPDU Number field may be 8-bit (or any other value) long. The MPDU Number field may indicate whether the error is in a PHY header or in an MPDU of the first PPDU. For example, the MPDU Number field may take the value `00000000' (or any other value), for example, if the error is in the PHY header of the first PPDU. The MPDU Number field may take the value `00000001' (or any other value), for example, if the error is in the first MPDU of the first PPDU. The MPDU Number field may be used to indicate (e.g., only indicate) the number of an MPDU in error. The Info Flags field further described below may be used to indicate an error in the PHY header of the first PPDU.

The Info Flags field may comprise a first information flag that may be used by the first STA to indicate to the second STA whether to continue transmission of the first PPDU, for example, if an error is detected by the first STA in an MPDU of the PPDU. The second STA may either stop transmission of the first PPDU or may continue transmission of the first PPDU until its end, for example, based on the first information flag. The Info Flags field may, additionally or alternatively, comprise a second information flag that may be used by the first STA to indicate to the second STA an error in the PHY header of the first PPDU as mentioned herein. The Info Flags field may, additionally or alternatively, comprise a third information flag that may be used by the first STA to indicate to the second STA how many Link ID fields are present. For example, a value of 0 of the third information flag may indicate that only one Link ID is provided, whereas a value of 1 may indicate that more than one Link ID is being provided.

The one or more Link ID fields may indicate one or more links that the second STA may use to send (e.g., transmit) a second PPDU to the first STA. The second PPDU as described herein may include the same data field as the first PPDU (e.g., if the error is detected in the PHY header of the first PPDU) or may include one or more MPDUs of the first PPDU (e.g., if the PHY header is received successfully but one or more MPDUs are received in error by the first STA).

As shown in FIG. 16, an example acknowledgment frame 1604 may include similar fields as described herein with respect to the acknowledgment frame 1602, with the difference in that the frame 1604 may comprise a link bitmap field instead of the one or more Link IDs in the frame 1602. The link bitmap field may indicate one or more links that the second STA may use to send (e.g., transmit) the second PPDU to the first STA. For example, each link between the first STA and the second STA may be associated with a corresponding bit of the link bitmap. A link may be indicated in the link bitmap, for example, if its corresponding bit is set to 1 (or any other value).

The FCS field may contain a 32-bit (or any other value) Cyclic Redundancy Check (CRC) code. The FCS field value may be calculated over all of the fields of the MAC header and the frame body field.

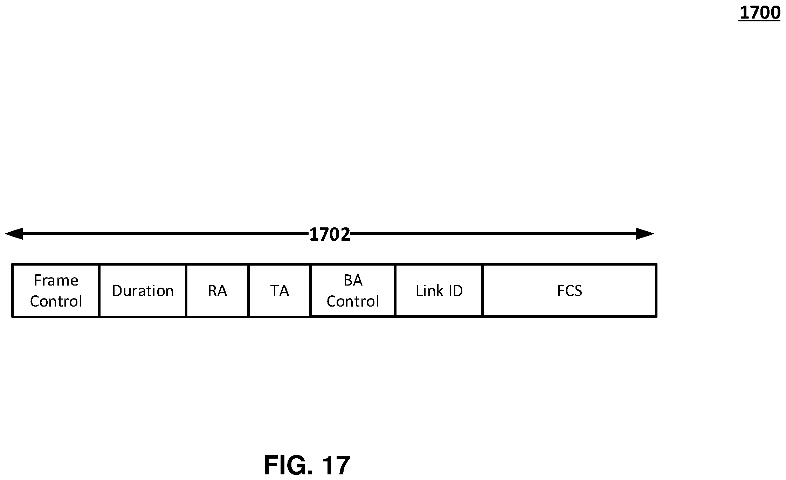

FIG. 17 shows an example acknowledgment response frame. Example acknowledgment response frame 1702 may be an ACK response frame or an XACK response frame. Example acknowledgment response frame 1702 may be sent (e.g., transmitted) by a first STA (AP STA or non-AP STA), for example, based on (e.g., in response to) an ACK or XACK received from a second STA.

As shown in FIG. 17, example acknowledgment response frame 1702 may include a Frame Control field, a Duration field, an RA field, a TA field, a BA Control field, a Link ID field, and an FCS field. The Frame Control, Duration, RA, TA, and FCS fields may be similar to the corresponding fields as described herein with respect to FIG. 16.

FIG. 18 shows an example field of an acknowledgment frame. More specifically, FIG. 18 shows an example BA Control field of an acknowledgment frame. The BA Control field may have a format as shown in FIG. 18. The BA Type subfield of the BA Control field may indicate whether the response frame 1702 is an ACK response frame or an XACK response frame.

FIG. 19 shows an example encoding. More specifically, FIG. 19 shows an example encoding of a BA type subfield of a BA control field. The BA Type subfield may use an encoding as shown in FIG. 19. For example, one of the reserved values of the BA Type subfield (e.g., 0, 4-5, or 12-15, etc.) may be used to indicate whether the response frame 1702 is an ACK response frame or an XACK response frame.

The Link ID field may indicate the link that the second STA may use to send (e.g., transmit) a second PPDU to the first STA. The second PPDU as described herein may include the same data field as the first PPDU (e.g., if the error is detected in the PHY header of the first PPDU) or may include one or more MPDUs of the first PPDU (e.g., if the PHY header is received successfully but one or more MPDUs are received in error by the first STA).

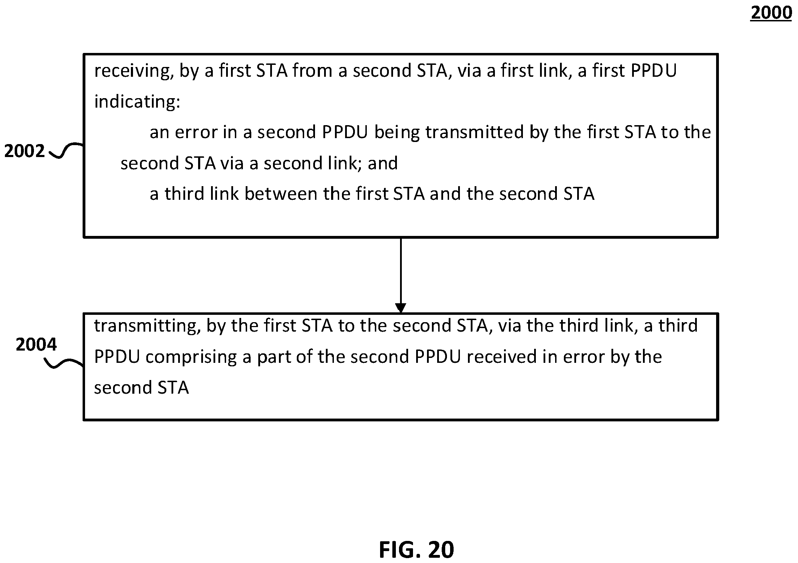

FIG. 20 shows an example method. One or more steps of the example method 2000 may be performed by a first STA (e.g., non-AP STA or AP STA) configured to communicate with a second STA (e.g., non-AP STA or AP STA). The first STA and the second STA may be communicatively coupled by a first link and a second link (e.g., 2.4 GHz, 5 GHz, 6 GHz, 60 GHz, etc.).

As shown in FIG. 20, at step 2002, a first STA may receive, from a second STA and via a first link, a first frame (e.g., PPDU). The first frame (e.g., PPDU) may indicate: an error in a second frame (e.g., PPDU) being sent (e.g., transmitted) by the first STA to the second STA via a second link; and a third link between the first STA and the second STA.

The first frame (e.g., PPDU) may further indicate a fourth link between the first STA and the second STA. The first frame (e.g., PPDU) may comprise a link bitmap indicating the third link. The first frame (e.g., PPDU) may comprise an identifier of the third link.

The third link may be same as the first link or the second link. The second link may be same or different than the first link. The third link may be selected by the second STA, for example, based on link measurements performed by the second STA as described herein.

The first frame (e.g., PPDU) may comprise an acknowledgment frame. The acknowledgment frame may comprise a NACK frame. The first frame (e.g., PPDU) may comprise a field indicating whether the error may be in a physical layer (PHY) header of the second frame (e.g., PPDU) or in a medium access control (MAC) protocol data unit (MPDU) of the second frame (e.g., PPDU).

The first frame (e.g., PPDU) may further comprise a field that may indicate to the first STA whether to continue transmission of the second frame (e.g., PPDU) via the second link, for example, if the error is in a MPDU of the second frame (e.g., PPDU). The second frame (e.g., PPDU) may comprise a PHY header and a MPDU. The error in the second frame (e.g., PPDU) may comprise: an error in a PHY header of the second frame (e.g., PPDU); or an error in a MPDU of the second frame (e.g., PPDU). The error in the PHY header of the second frame (e.g., PPDU) may correspond to an error value or a validate value in a Universal Signal field (U-SIG), an Extremely High Throughout (EHT) Signal field (EHT-SIG), or an Ultra High Reliability (UHR) Signal field (U-SIG) of the PHY header of the second frame (e.g., PPDU). The error in the MPDU of the second frame (e.g., PPDU) may correspond to an error in a Frame Check Sequence (FCS) associated with the MPDU.

At step 2004, the first STA may send (e.g., transmit), to the second STA and via the third link, a third frame (e.g., PPDU) comprising a part of the first frame (e.g., PPDU) received in error by the second STA. The third frame (e.g., PPDU) may comprise a PPDU. The third frame may comprise a part of the second frame (e.g., PPDU) received in error by the second STA. The third frame (e.g., PPDU) may be sent (e.g., transmitted) concurrently with sending (e.g., transmitting) the second frame (e.g., PPDU). The third frame (e.g., PPDU) may be sent (e.g., transmitted), for example, after the sending (e.g., transmitting) the second frame (e.g., PPDU).

The method 2000 may further include stopping transmission of the second frame (e.g., PPDU) on the second link, for example, if the error may be in a PHY header of the second frame (e.g., PPDU). The method 2000 may further include recording the error by the second STA and continuing transmission of the second frame (e.g., PPDU), for example, if the error may be in a MPDU of the second frame (e.g., PPDU). The method 2000 may further include sending (e.g., transmitting), by the first STA, to the second STA, via/on the second link, a response frame to the first frame (e.g., PPDU). The response frame may indicate the third link.

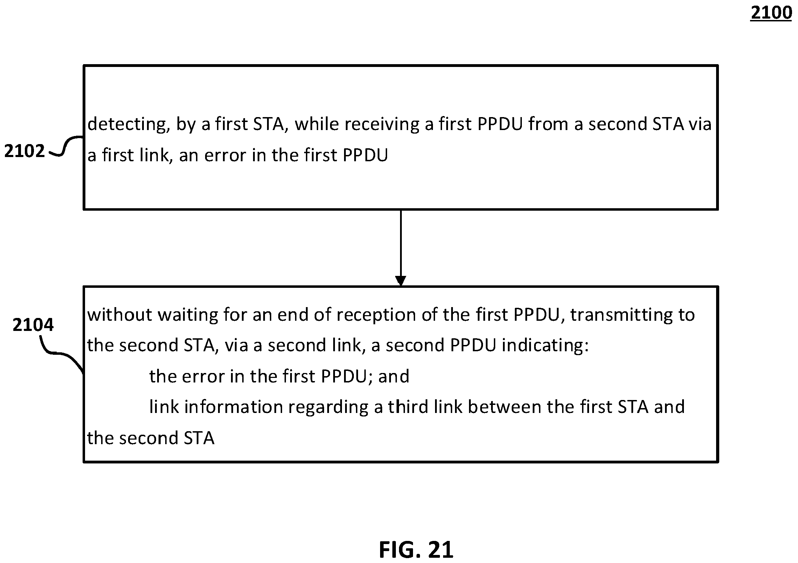

FIG. 21 shows an example method. One or more steps of the example method 2100 may be performed by a first STA (e.g., non-AP STA or AP STA) configured to communicate with a second STA (e.g., non-AP STA or AP STA). The first STA and the second STA may be communicatively coupled by a first link and a second link (e.g., 2.4 GHz, 5 GHz, 6 GHz, 60 GHz, etc.).

As shown in FIG. 21, at step 2102, a first STA may detect, while receiving a first frame (e.g., PPDU) from a second STA via a first link, an error in the first frame (e.g., PPDU). The error in the first frame (e.g., PPDU) may comprise: an error in a PHY header; or an error in a MPDU. The error in the PHY header may correspond to an error value or a validate value in a Universal Signal field (U-SIG), an Extremely High Throughout (EHT) Signal field (EHT-SIG), or an Ultra High Reliability (UHR) Signal field (U-SIG) of the PHY header. The error in the MPDU of the first frame (e.g., PPDU) may correspond to an error in a Frame Check Sequence (FCS) associated with the MPDU.

At step 2104, the first STA may send (e.g., transmit), to the second STA, via a second link, a second frame (e.g., PPDU) indicating: the error in the first frame (e.g., PPDU) and a third link between the first STA and the second STA, without waiting for an end of reception of the first frame (e.g., PPDU). For example, the second frame (e.g., PPDU) may comprise an acknowledgment frame. The acknowledgment frame may comprise a NACK frame. The second frame (e.g., PPDU) may comprise a field indicating whether the error may be in a PHY header of the first frame (e.g., PPDU) or in a MPDU of the first frame (e.g., PPDU). The second frame (e.g., PPDU) may further comprise a field that indicates to the first STA whether to continue transmission of the first frame (e.g., PPDU) via the second link, for example, if the error may be in a MPDU of the first frame (e.g., PPDU).

The second frame (e.g., PPDU) may further indicate a fourth link between the first STA and the second STA. The second frame (e.g., PPDU) may comprise a link bitmap indicating the third link. The second frame (e.g., PPDU) may comprise an identifier of the third link. The third link may be same as the first link or the second link. The second link may be same or different than the first link.

The method 2100 may further comprise selecting the third link, for example, based on link measurements performed by the first STA. The first STA may perform a link measurement for one or more (e.g., all) links between the first STA and the second STA and may select the third link, for example, based on the performed link measurements. The link measurement for a link may comprise one or more of: a channel load measurement; an average noise plus interference power indicator (ANIPI) measurement; or a received signal-to-noise indicator (RSNI) measurement. The channel load measurement may be performed according to one or more standards, such as section 11.10.9.3 of the IEEE 802.11 standard ("IEEE P802.11-REVme/D2.1, January 2023.") and/or any earlier or later release and/or version. The channel load measurement may be defined as the percentage of time that the measuring STA senses the channel/link as busy (as indicated by either the virtual carrier sense mechanism or the physical carrier sense mechanism over the requested channel width) over a measurement duration. The ANIPI measurement may be based on a MAC indication of the average noise plus interference power measured on a channel/link that meets the two simultaneous conditions: 1) the STA may be not sending (e.g., transmitting) a frame, and 2) the STA may be not receiving a frame addressed to it. The RSNI measurement may be based on an indication of the signal-to-noise plus interference ratio of a received frame.

The first STA may perform a channel load measurement for a plurality of links between the first STA and the second STA. The plurality of links may include all links between the first STA and the second STA. The third link may correspond to the link of the plurality of links having the lowest channel load measurement. The third link may be the same as the first link, for example, if the channel load measurement for the first link may be lower than a pre-defined threshold.

The first STA may perform an ANIPI measurement for a plurality of links between the first STA and the second STA. The plurality of links may include all links between the first STA and the second STA. The third link may correspond to the link of the plurality of links having the lowest ANIPI measurement. The third link may be the same as the first link, for example, if the ANIPI measurement for the first link may be lower than a pre-defined threshold.

The first STA may perform an RSNI measurement for a plurality of links between the first STA and the second STA. The RSNI measurement for a link may be, for example, based on a last received frame on the link. In particular, for the first link, the RSNI measurement may be based on the frame contained in the first frame (e.g., PPDU). The plurality of links may include all links between the first STA and the second STA. The third link may correspond to the link of the plurality of links having the highest RSNI measurement. The third link may be the same as the first link, for example, if the RSNI measurement for the first link (for the first frame (e.g., PPDU) may be greater than a pre-defined threshold.

The method 2100 may further comprise receiving, from the second STA, a third frame (e.g., PPDU) comprising a part of the first frame (e.g., PPDU) received in error by the first STA. The first STA may receive the third frame (e.g., PPDU), for example, concurrently with receiving the first frame (e.g., PPDU). The first STA may receive the third frame (e.g., PPDU), for example, after an end of reception of the first frame (e.g., PPDU). The first STA may stop receiving the first frame (e.g., PPDU), for example, if the error is in a PHY header of the first frame (e.g., PPDU). The first STA may continue receiving the first frame (e.g., PPDU), for example, if the error is in a MPDU of the first frame (e.g., PPDU).

The method 2100 may further comprise receiving, from the second STA via the second link, a response frame to the second frame (e.g., PPDU). The response frame may indicate the third link.

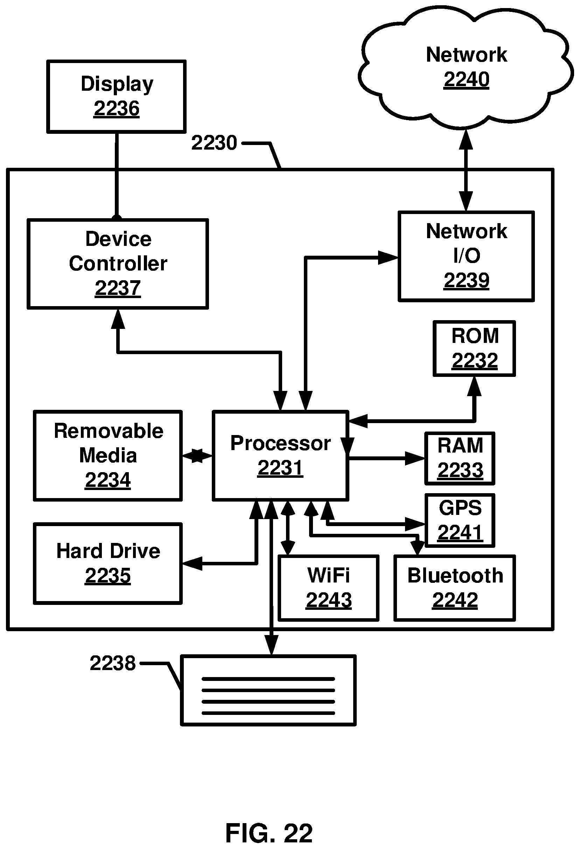

FIG. 22 shows example elements of a computing device that may be used to implement any of the various devices described herein, including, for example, a STA (e.g., 106-1, 106-2, 106-3, 106-4, 106-5, 106-6, 106-7, 106-8, 450-1 to 450-8, 502, 504, 602, 604, 702, 704, 1002, 1004, 1102, 1104, 1202, 1204, 1302, 1304, 1402, 1404, 1502, 1504), an AP (e.g., 104-1, 104-2), communication devices (e.g., 210, 260), and/or any computing and/or communication device described herein. The computing device 2230 may comprise one or more processors 2231, which may execute instructions stored in the random-access memory (RAM) 2233, the removable media 2234 (such as a Universal Serial Bus (USB) drive, compact disk (CD) or digital versatile disk (DVD), or floppy disk drive), or any other desired storage medium. Instructions may also be stored in an attached (or internal) hard drive 2235. The computing device 2230 may also comprise a security processor (not shown), which may execute instructions of one or more computer programs to monitor the processes executing on the processor 2231 and any process that requests access to any hardware and/or software components of the computing device 2230 (e.g., ROM 2232, RAM 2233, the removable media 2234, the hard drive 2235, the device controller 2237, a network interface 2239, a GPS 2241, a Bluetooth interface 2242, a WiFi interface 2243, etc.). The computing device 2230 may comprise one or more output devices, such as the display 2236 (e.g., a screen, a display device, a monitor, a television, etc.), and may comprise one or more output device controllers 2237, such as a video processor. There may also be one or more user input devices 2238, such as a remote control, keyboard, mouse, touch screen, microphone, etc. The computing device 2230 may also comprise one or more network interfaces, such as a network interface 2239, which may be a wired interface, a wireless interface, or a combination of the two. The network interface 2239 may provide an interface for the computing device 2230 to communicate with a network 2240 (e.g., a RAN, or any other network). The network interface 2239 may comprise a modem (e.g., a cable modem), and the external network 2240 may comprise communication links, an external network, an in-home network, a provider's wireless, coaxial, fiber, or hybrid fiber/coaxial distribution system (e.g., a DOCSIS network), or any other desired network. Additionally, the computing device 2230 may comprise a location-detecting device, such as a global positioning system (GPS) microprocessor 2241, which may be configured to receive and process global positioning signals and determine, with possible assistance from an external server and antenna, a geographic position of the computing device 2230.

The example in FIG. 22 may be a hardware configuration, although the components shown may be implemented as software as well. Modifications may be made to add, remove, combine, divide, etc. components of the computing device 2230 as desired. Additionally, the components may be implemented using basic computing devices and components, and the same components (e.g., processor 2231, ROM storage 2232, display 2236, etc.) may be used to implement any of the other computing devices and components described herein. For example, the various components described herein may be implemented using computing devices having components such as a processor executing computer-executable instructions stored on a computer-readable medium, as shown in FIG. 22. Some or all of the entities described herein may be software based, and may co-exist in a common physical platform (e.g., a requesting entity may be a separate software process and program from a dependent entity, both of which may be executed as software on a common computing device).

Hereinafter, various characteristics will be highlighted in a set of numbered clauses or paragraphs. These characteristics are not to be interpreted as being limiting on the invention or inventive concept, but are provided merely as a highlighting of some characteristics as described herein, without suggesting a particular order of importance or relevancy of such characteristics.

Clause 1. A method comprising: receiving, by a first wireless device from a second wireless device, via a first link, an acknowledgment message indicating: an error in a first data unit being transmitted by the first wireless device to the second wireless device via a second link; and a third link between the first wireless device and the second wireless device.

Clause 2. The method of clause 1, further comprising: based on the acknowledgment message, transmitting, to the second wireless device and via the third link, a second data unit comprising at least part of the first data unit indicated by the error.

Clause 3. The method of clause 1 or clause 2, wherein: the acknowledgment message comprises an acknowledgment frame, the first data unit comprises a first physical layer protocol data unit (PPDU); and the second data unit comprises a second PPDU.

Clause 4. The method of any one of clauses 1 to 3, wherein the first data unit comprises a physical layer protocol data unit (PPDU), and wherein the error comprises at least one of: an error in a physical layer (PHY) header of the PPDU; or an error in a medium access control (MAC) protocol data unit (MPDU) of the PPDU.

Clause 5. The method of any one of clauses 1 to 4, wherein the acknowledgment message further indicates one or more links other than the third link.

Clause 6. The method of any one of clauses 1 to 5, wherein: the first link corresponds to a first frequency channel; the second link corresponds to a second frequency channel different from the first frequency channel; and the third link corresponds to a third frequency channel different from the first frequency channel and different from the second frequency channel.

Clause 7. The method of any one of clauses 1 to 6, further comprising transmitting the second data unit concurrently with transmitting the first data unit.

Clause 8. The method of any one of clauses 1 to 7, further comprising: transmitting, to the second wireless device and via the first link, a response message to the acknowledgment message.

Clause 9. The method of any one of clauses 1 to 8, further comprising: monitoring, during transmission of the first data unit, the first link for the acknowledgment message.

Clause 10. A method comprising: transmitting, by a first wireless device to a second wireless device, via a first link, a first data unit.

Clause 11. The method of clause 10, further comprising: during transmission of the first data unit, receiving, from the second wireless device and via a second link, a second data unit indicating an error in the first data unit.

Clause 12. The method of clause 10 or clause 11, further comprising: during transmission of the first data unit and based on the second data unit, transmitting, to the second wireless device and via a third link, a third data unit comprising at least part of the first data unit.

Clause 13. The method of any one of clauses 10 to 12, wherein the second data unit further indicates the third link.

Clause 14. The method of any one of clauses 10 to 13, wherein the second data unit further indicates a plurality of links comprising the third link, and wherein the method further comprises: transmitting, to the second wireless device and via the first link, a response message indicating a selection of the third link among the plurality of links.

Clause 15. The method of any one of clauses 10 to 14, wherein: the first link corresponds to a first frequency channel; the second link corresponds to a second frequency channel different from the first frequency channel; and the third link corresponds to a third frequency channel different from the first frequency channel and different from the second frequency channel.

Clause 16. The method of any one of clauses 10 to 15, wherein the first data unit comprises a physical layer protocol data unit (PPDU), and wherein the error comprises at least one of: an error in a physical layer (PHY) header of the PPDU; or an error in a medium access control (MAC) protocol data unit (MPDU) of the PPDU.

Clause 17. The method of any one of clauses 10 to 16, wherein the third data unit comprises a part, of the first data unit, that comprises the error during the transmission of the first data unit.

Clause 18. The method of any one of clauses 10 to 17, further comprising: monitoring the first link for the second data unit, during transmission of the first data unit.

Clause 19. A method comprising: determining, by a first wireless device and during reception of a first data unit from a second wireless device via a first link, an error in the first data unit.

Clause 20. The method of clause 19, further comprising: before an end of reception of the first data unit, transmitting to the second wireless device, via a second link, a second data unit indicating: the error in the first data unit; and one or more links between the first wireless device and the second wireless device.

Clause 21. The method of clause 19 or clause 20, further comprising: determining, based on link measurements performed by the first wireless device, the one or more links.

Clause 22. The method of any one of clauses 19 to 21, wherein the one or more links are different from at least one of: the first link, or the second link.

Clause 23. The method of any one of clauses 19 to 22, further comprising: receiving, from the second wireless device, during reception of the first data unit and via one of the one or more links, a third data unit comprising at least part of the first data unit.

Clause 24. The method of any one of clauses 19 to 23, wherein the first data unit comprises a physical layer protocol data unit (PPDU), and wherein the error comprises at least one of: an error in a physical layer (PHY) header of the PPDU; or an error in a medium access control (MAC) protocol data unit (MPDU) of the PPDU.

Clause 25. A computing device comprising: one or more processors; and memory storing instructions that, when executed by the one or more processors, cause the computing device to perform the method of any one of clauses 1 to 24.

Clause 26. A system comprising: a first wireless device configured to perform the method of any one of clauses 1 to 24; and a second wireless device configured to send the acknowledgment.

Clause 27. A computer-readable medium storing instructions that, when executed, cause performance of the method of any one of clauses 1 to 24.

Clause 28. A method comprising: receiving, by a first station (first STA, first wireless device) from a second STA (second wireless device, second station), on a first link, an acknowledgment frame indicating: an error in a first physical layer protocol data unit (PPDU) being transmitted by the first STA to the second STA on a second link; and a third link between the first STA and the second STA.

Clause 29. The method of clause 28, further comprising: transmitting, by the first STA to the second STA, on the third link, a second PPDU comprising a part of the first PPDU received in error by the second STA.

Clause 30. A method comprising: receiving, by a first station (first STA, first wireless device) from a second STA (second wireless device, second station), on a first link, a first physical layer protocol data unit (PPDU) indicating: an error in a second PPDU being transmitted by the first STA to the second STA on a second link; and a third link between the first STA and the second STA.

Clause 31. The method of clause 30, further comprising: transmitting, by the first STA to the second STA, on the third link, a third PPDU comprising a part of the second PPDU received in error by the second STA.

Clause 32. The method of clause 30 or clause 31, wherein the first PPDU further indicates a fourth link between the first STA and the second STA.

Clause 33. The method of any of clauses 30 to 32, wherein the first PPDU comprises a link bitmap indicating the third link.

Clause 34. The method of any of clauses 30 to 33, wherein the first PPDU comprises an identifier of the third link.

Clause 35. The method of any of clauses 30 to 34, wherein the third link is same as the first link or the second link.

Clause 36. The method of any of clauses 30 to 35, wherein the second link is same or different than the first link.

Clause 37. The method of any of clauses 30 to 36, wherein the part of the second PPDU comprises one or more of: a physical layer (PHY) header of the second PPDU; and a medium access control (MAC) protocol data unit (MPDU) of the second PPDU.

Clause 38. The method of any of clauses 30 to 37, wherein the error in the second PPDU comprises: an error in a physical layer (PHY) header of the second PPDU; or an error in a medium access control (MAC) protocol data unit (MPDU) of the second PPDU.

Clause 39. The method of any of clauses 30 to 38, wherein the error in the PHY header of the second PPDU corresponds to an error value or a validate value in a Universal Signal field (U-SIG), an Extremely High Throughout (EHT) Signal field (EHT-SIG), or an Ultra High Reliability (UHR) Signal field (U-SIG) of the PHY header of the second PPDU.

Clause 40. The method of any of clauses 30 to 39, wherein the error in the MPDU of the second PPDU corresponds to an error in a Frame Check Sequence (FCS) associated with the MPDU.

Clause 41. The method of any of clauses 30 to 40, comprising transmitting the third PPDU concurrently with transmitting the second PPDU.

Clause 42. The method of any of clauses 30 to 41, comprising transmitting the third PPDU after terminating transmitting of the second PPDU.

Clause 43. The method of any of clauses 30 to 42, further comprising stopping transmission of the second PPDU on the second link when the error is in a physical layer (PHY) header of the second PPDU.

Clause 44. The method of any of clauses 30 to 43, further comprising recording the error and continuing transmission of the second PPDU when the error is in a medium access control (MAC) protocol data unit (MPDU) of the second PPDU.

Clause 45. The method of any of clauses 30 to 44, wherein the first PPDU comprises an acknowledgment frame.

Clause 46. The method of any of clauses 30 to 45, wherein the acknowledgment frame comprises a NACK frame.

Clause 47. The method of any of clauses 30 to 46, wherein the first PPDU comprises a field indicating whether the error is in a physical layer (PHY) header of the second PPDU or in a medium access control (MAC) protocol data unit (MPDU) of the second PPDU.

Clause 48. The method of any of clauses 30 to 47, wherein the first PPDU further comprises a field that indicates to the first STA whether to continue transmission of the second PPDU on the second link when the error is in a medium access control (MAC) protocol data unit (MPDU) of the second PPDU.

Clause 49. The method of any of clauses 30 to 48, further comprising transmitting, to the second STA on the second link, a response frame to the first PPDU.

Clause 50. The method of any of clauses 30 to 49, wherein the response frame indicates the third link.

Clause 51. A method comprising: detecting, by a first station (first STA, first wireless device), while receiving a physical layer protocol data unit (PPDU) from a second STA (second wireless device, second station) on a first link between the first STA and the second STA, an error in the PPDU.

Clause 52. The method of clause 51, further comprising: without waiting for an end of reception of the PPDU, transmitting to the second STA, on a second link between the first STA and the second STA, an acknowledgment frame indicating: the error in the PPDU; and a third link between the first STA and the second STA.

Clause 53. A method comprising: detecting, by a first station (first STA, first wireless device), while receiving a first physical layer protocol data unit (PPDU) from a second STA (second wireless device, second station) on a first link, an error in the first PPDU.

Clause 54. The method of clause 53, further comprising: without waiting for an end of reception of the first PPDU, transmitting to the second STA, on a second link, a second PPDU indicating: the error in the first PPDU; and a third link between the first STA and the second STA.

Clause 55. The method of clause 53 or clause 54, wherein the second PPDU further indicates a fourth link between the first STA and the second STA.

Clause 56. The method of any of clauses 53 to 55, wherein the second PPDU comprises a link bitmap indicating the third link.

Clause 57. The method of any of clauses 53 to 56, wherein the second PPDU comprises an identifier of the third link.

Clause 58. The method of any of clauses 53 to 57, wherein the third link is same as the first link or the second link.

Clause 59. The method of any of clauses 53 to 58, wherein the second link is same or different than the first link.

Clause 60. The method of any of clauses 53 to 59, further comprising receiving, from the second STA, a third PPDU comprising a part of the first PPDU received in error by the first STA.

Clause 61. The method of any of clauses 53 to 60, wherein the part of the first PPDU comprises one or more of: a physical layer (PHY) header of the first PPDU; and a medium access control (MAC) protocol data unit (MPDU) of the first PPDU.

Clause 62. The method of any of clauses 53 to 61, wherein the error in the first PPDU comprises: an error in a physical layer (PHY) header of the first PPDU; or an error in a medium access control (MAC) protocol data unit (MPDU) of the first PPDU.

Clause 63. The method of any of clauses 53 to 62, wherein the error in the PHY header of the first PPDU corresponds to an error value or a validate value in a Universal Signal field (U-SIG), an Extremely High Throughout (EHT) Signal field (EHT-SIG), or an Ultra High Reliability (UHR) Signal field (U-SIG) of the PHY header of the first PPDU.

Clause 64. The method of any of clauses 53 to 63, wherein the error in the MPDU of the first PPDU corresponds to an error in a Frame Check Sequence (FCS) associated with the MPDU.

Clause 65. The method of any of clauses 53 to 64, comprising receiving the third PPDU concurrently with receiving the first PPDU.

Clause 66. The method of any of clauses 53 to 65, comprising receiving the third PPDU after an end of reception of the first PPDU.

Clause 67. The method of any of clauses 53 to 66, further comprising stopping receiving the first PPDU when the error is in a physical layer (PHY) header of the first PPDU.

Clause 68. The method of any of clauses 53 to 67, further comprising continuing receiving the first PPDU when the error is in a medium access control (MAC) protocol data unit (MPDU) of the first PPDU.

Clause 69. The method of any of clauses 53 to 68, wherein the second PPDU comprises an acknowledgment frame.

Clause 70. The method of any of clauses 53 to 69, wherein the acknowledgment frame comprises a NACK frame.

Clause 71. The method of any of clauses 53 to 70, wherein the second PPDU comprises a field indicating whether the error is in a physical layer (PHY) header of the first PPDU or in a medium access control (MAC) protocol data unit (MPDU) of the first PPDU.

Clause 72. The method of any of clauses 53 to 71, wherein the second PPDU further comprises a field that indicates to the first STA whether to continue transmission of the first PPDU on the second link when the error is in a medium access control (MAC) protocol data unit (MPDU) of the first PPDU.

Clause 73. The method of any of clauses 53 to 72, further comprising receiving, from the second STA on the second link, a response frame to the second PPDU.

Clause 74. The method of any of clauses 53 to 73, wherein the response frame indicates the third link.

Clause 75. The method of any of clauses 53 to 74, further comprising selecting the third link based on a link measurement performed by the first STA.

Clause 76. The method of any of clauses 53 to 75, wherein the link measurements comprise one or more of: a channel load measurement, an average noise plus interference power indicator (ANIPI) measurement, or a received signal-to-noise indicator (RSNI) measurement.

A first wireless device (e.g., station) may perform a method comprising multiple operations. The first wireless device may receive, from a second wireless device (e.g., station), via a first link, an acknowledgment message. The acknowledgment message may indicate: an error in a first data unit being transmitted by the first wireless device to the second wireless device via a second link; and a third link between the first wireless device and the second wireless device. Based on the acknowledgment message, the first wireless device may transmit, to the second wireless device and via the third link, a second data unit comprising at least part of the first data unit indicated by the error. The acknowledgment message may comprise an acknowledgment frame. The first data unit may comprise a first physical layer protocol data unit (PPDU). The second data unit may comprise a second PPDU. The first data unit may comprise a physical layer protocol data unit (PPDU). The error may comprise at least one of: an error in a physical layer (PHY) header of the PPDU; or an error in a medium access control (MAC) protocol data unit (MPDU) of the PPDU. The acknowledgment message may further indicate one or more links other than the third link. The first link may correspond to a first frequency channel. The second link may correspond to a second frequency channel different from the first frequency channel. The third link may correspond to a third frequency channel different from the first frequency channel and different from the second frequency channel. The first wireless device may transmit the second data unit concurrently with transmitting the first data unit. The first wireless device may transmit, to the second wireless device and via the first link, a response message to the acknowledgment message. The first wireless device may monitor, during transmission of the first data unit, the first link for the acknowledgment message. The first wireless device may comprise one or more processors; and memory storing instructions that, when executed by the one or more processors, cause the first wireless device to perform the described method, additional operations and/or include the additional elements. A system may comprise a first wireless device configured to perform the described method, additional operations and/or include the additional elements; and a second wireless device configured to communicate with the first wireless device. A computer-readable medium may store instructions that, when executed, cause performance of the described method, additional operations, and/or include the additional elements.

A first wireless device (e.g., station) may perform a method comprising multiple operations. The first wireless device may transmit, to a second wireless device (e.g., station), via a first link, a first data unit. During transmission of the first data unit, the first wireless device may receive, from the second wireless device and via a second link, a second data unit indicating an error in the first data unit. During transmission of the first data unit and based on the second data unit, the first wireless device may transmit, to the second wireless device and via a third link, a third data unit comprising at least part of the first data unit. The second data unit may further indicate the third link. The second data unit may further indicate a plurality of links comprising the third link. The first wireless device may transmit, to the second wireless device and via the first link, a response message indicating a selection of the third link among the plurality of links. The first link may correspond to a first frequency channel. The second link may correspond to a second frequency channel different from the first frequency channel. The third link may correspond to a third frequency channel different from the first frequency channel and different from the second frequency channel. The first data unit may comprise a physical layer protocol data unit (PPDU). The error may comprise at least one of: an error in a physical layer (PHY) header of the PPDU; or an error in a medium access control (MAC) protocol data unit (MPDU) of the PPDU. The third data unit may comprise a part, of the first data unit, that may comprise the error during the transmission of the first data unit. The first wireless device may monitor the first link for the second data unit, during transmission of the first data unit. The first wireless device may comprise one or more processors; and memory storing instructions that, when executed by the one or more processors, cause the first wireless device to perform the described method, additional operations and/or include the additional elements. A system may comprise a first wireless device configured to perform the described method, additional operations and/or include the additional elements; and a second wireless device configured to communicate with the first wireless device. A computer-readable medium may store instructions that, when executed, cause performance of the described method, additional operations, and/or include the additional elements.

A first wireless device (e.g., station) may perform a method comprising multiple operations. The first wireless device may determine, during reception of a first data unit from a second wireless device (e.g., station) via a first link, an error in the first data unit. Before an end of reception of the first data unit, the first wireless device may transmit to the second wireless device, via a second link, a second data unit. The second data unit may indicate: the error in the first data unit; and one or more links between the first wireless device and the second wireless device. The first wireless device may determine, for example, based on link measurements performed by the first wireless device, the one or more links. The one or more links may be different from at least one of: the first link, or the second link. The first wireless device may receive, from the second wireless device, during reception of the first data unit and via one of the one or more links, a third data unit comprising at least part of the first data unit. The first data unit may comprise a physical layer protocol data unit (PPDU). The error may comprise at least one of: an error in a physical layer (PHY) header of the PPDU; or an error in a medium access control (MAC) protocol data unit (MPDU) of the PPDU. The first wireless device may comprise one or more processors; and memory storing instructions that, when executed by the one or more processors, cause the first wireless device to perform the described method, additional operations and/or include the additional elements. A system may comprise a first wireless device configured to perform the described method, additional operations and/or include the additional elements; and a second wireless device configured to communicate with the first wireless device. A computer-readable medium may store instructions that, when executed, cause performance of the described method, additional operations, and/or include the additional elements.

A first station may perform a method comprising multiple operations. The first station may receive, from a second station, on a first link, an acknowledgment frame. The acknowledgment frame may indicate: an error in a first physical layer protocol data unit (PPDU) being transmitted by the first station to the second station on a second link; and a third link between the first station and the second station. The first station may transmit, to the second station, on the third link, a second PPDU comprising a part of the first PPDU received in error by the second station. The first station may comprise one or more processors; and memory storing instructions that, when executed by the one or more processors, cause the first station to perform the described method, additional operations and/or include the additional elements. A system may comprise a first station configured to perform the described method, additional operations and/or include the additional elements; and a second station configured to communicate with the first station. A computer-readable medium may store instructions that, when executed, cause performance of the described method, additional operations, and/or include the additional elements.

A first station may perform a method comprising multiple operations. The first station may receive, from a second station, on a first link, a first physical layer protocol data unit (PPDU). The PPDU may indicate: an error in a second PPDU being transmitted by the first station to the second station on a second link; and a third link between the first station and the second station. The first station may transmit, to the second station, on the third link, a third PPDU comprising a part of the second PPDU received in error by the second station. The first PPDU may further indicate a fourth link between the first station and the second station. The first PPDU may comprise a link bitmap indicating the third link. The first PPDU may comprise an identifier of the third link. The third link may be same as the first link or the second link. The second link may be same or different than the first link. The part of the second PPDU may comprise one or more of: a physical layer (PHY) header of the second PPDU; and a medium access control (MAC) protocol data unit (MPDU) of the second PPDU. The error in the second PPDU may comprise: an error in a physical layer (PHY) header of the second PPDU; or an error in a medium access control (MAC) protocol data unit (MPDU) of the second PPDU. The error in the PHY header of the second PPDU may correspond to an error value or a validate value in a Universal Signal field (U-SIG), an Extremely High Throughout (EHT) Signal field (EHT-SIG), or an Ultra High Reliability (UHR) Signal field (U-SIG) of the PHY header of the second PPDU. The error in the MPDU of the second PPDU may correspond to an error in a Frame Check Sequence (FCS) associated with the MPDU. The first station may transmit the third PPDU concurrently with transmitting the second PPDU. The first station may transmit the third PPDU, for example, after terminating transmitting of the second PPDU. The first station may stop transmission of the second PPDU on the second link, for example, when the error is in a physical layer (PHY) header of the second PPDU. The first station may record the error and continue transmission of the second PPDU, for example, when the error is in a medium access control (MAC) protocol data unit (MPDU) of the second PPDU. The first PPDU may comprise an acknowledgment frame. The acknowledgment frame may comprise a NACK frame. The first PPDU may comprise a field indicating whether the error may be in a physical layer (PHY) header of the second PPDU or in a medium access control (MAC) protocol data unit (MPDU) of the second PPDU. The first PPDU may further comprise a field that may indicate to the first station whether to continue transmission of the second PPDU on the second link, for example, when the error is in a medium access control (MAC) protocol data unit (MPDU) of the second PPDU. The first station may transmit, to the second station on the second link, a response frame to the first PPDU. The response frame may indicate the third link. The first station may comprise one or more processors; and memory storing instructions that, when executed by the one or more processors, cause the first station to perform the described method, additional operations and/or include the additional elements. A system may comprise a first station configured to perform the described method, additional operations and/or include the additional elements; and a second station configured to communicate with the first station. A computer-readable medium may store instructions that, when executed, cause performance of the described method, additional operations, and/or include the additional elements.

A first station may perform a method comprising multiple operations. The first station may detect, while receiving a physical layer protocol data unit (PPDU) from a second station on a first link between the first station and the second station, an error in the PPDU. Without waiting for an end of reception of the PPDU, the first station may transmit to the second station, on a second link between the first station and the second station, an acknowledgment frame indicating: the error in the PPDU; and a third link between the first station and the second station. The first station may comprise one or more processors; and memory storing instructions that, when executed by the one or more processors, cause the first station to perform the described method, additional operations and/or include the additional elements. A system may comprise a first station configured to perform the described method, additional operations and/or include the additional elements; and a second station configured to communicate with the first station. A computer-readable medium may store instructions that, when executed, cause performance of the described method, additional operations, and/or include the additional elements.

A first station may perform a method comprising multiple operations. The first station may detect, while receiving a first physical layer protocol data unit (PPDU) from a second station on a first link, an error in the first PPDU. Without waiting for an end of reception of the first PPDU, the first station may transmit to the second station, on a second link, a second PPDU indicating: the error in the first PPDU; and a third link between the first station and the second station. The second PPDU may further indicate a fourth link between the first station and the second station. The second PPDU may comprise a link bitmap indicating the third link. The second PPDU may comprise an identifier of the third link. The third link may be same as the first link or the second link. The second link may be same or different than the first link. The first station may receive, from the second station, a third PPDU comprising a part of the first PPDU received in error by the first station. The part of the first PPDU may comprise one or more of: a physical layer (PHY) header of the first PPDU; and a medium access control (MAC) protocol data unit (MPDU) of the first PPDU. The error in the first PPDU may comprise: an error in a physical layer (PHY) header of the first PPDU; or an error in a medium access control (MAC) protocol data unit (MPDU) of the first PPDU. The error in the PHY header of the first PPDU may correspond to an error value or a validate value in a Universal Signal field (U-SIG), an Extremely High Throughout (EHT) Signal field (EHT-SIG), or an Ultra High Reliability (UHR) Signal field (U-SIG) of the PHY header of the first PPDU. The error in the MPDU of the first PPDU may correspond to an error in a Frame Check Sequence (FCS) associated with the MPDU. The first station may receive the third PPDU concurrently with receiving the first PPDU. The first station may receive the third PPDU, for example, after an end of reception of the first PPDU. The first station may stop receiving the first PPDU, for example, when the error is in a physical layer (PHY) header of the first PPDU. The first station may continue receiving the first PPDU, for example, when the error is in a medium access control (MAC) protocol data unit (MPDU) of the first PPDU. The second PPDU may comprise an acknowledgment frame. The acknowledgment frame may comprise a NACK frame. The second PPDU may comprise a field indicating whether the error may be in a physical layer (PHY) header of the first PPDU or in a medium access control (MAC) protocol data unit (MPDU) of the first PPDU. The second PPDU may further comprise a field that may indicate to the first station whether to continue transmission of the first PPDU on the second link, for example, when the error is in a medium access control (MAC) protocol data unit (MPDU) of the first PPDU. The first station may receive, from the second station on the second link, a response frame to the second PPDU. The response frame may indicate the third link. The first station may select the third link, for example, based on a link measurement performed by the first station. The link measurements may comprise one or more of: a channel load measurement, an average noise plus interference power indicator (ANIPI) measurement, or a received signal-to-noise indicator (RSNI) measurement. The first station may comprise one or more processors; and memory storing instructions that, when executed by the one or more processors, cause the first station to perform the described method, additional operations and/or include the additional elements. A system may comprise a first station configured to perform the described method, additional operations and/or include the additional elements; and a second station configured to communicate with the first station. A computer-readable medium may store instructions that, when executed, cause performance of the described method, additional operations, and/or include the additional elements.

One or more of the operations described herein may be conditional. For example, one or more operations may be performed if certain criteria are met, such as in a wireless device, a base station, a radio environment, a network, a combination of the above, and/or the like. Example criteria may be based on one or more conditions such as wireless device and/or network node configurations, traffic load, initial system set up, packet sizes, traffic characteristics, a combination of the above, and/or the like. If the one or more criteria are met, various examples may be used. It may be possible to implement any portion of the examples described herein in any order and based on any condition.

An access point (and an AP MLD) may communicate with one or more wireless devices (e.g., computing device(s), non-AP MLD(s), station(s), etc.). Computing devices described herein may support multiple technologies, and/or multiple releases of the same technology. Computing devices may have some specific capability(ies) depending on wireless device category and/or capability(ies). Computing devices referred to herein may correspond to a plurality of computing devices compatible with a given LTE, 5G, 6G, 3GPP or non-3GPP release, IEEE 802.11 Standard(s) (e.g., IEEE 802.11be, beyond IEEE 802.11be), or Wi-Fi Alliance (WFA) Standard(s) (e.g., Wi-Fi 7, Wi-Fi 8) technology. A plurality of computing devices may refer to a selected plurality of wireless devices, a subset of total wireless devices in a coverage area, and/or any group of wireless devices. Such devices may operate, function, and/or perform based on or according to drawings and/or descriptions herein, and/or the like. There may be a plurality of access points and/or a plurality of wireless devices in a coverage area that may not comply with the disclosed methods, for example, because those wireless devices and/or access points may perform based on other (e.g., older or newer) releases of LTE, 5G, 6G, 3GPP or non-3GPP, IEEE 802.11 Standards (e.g., IEEE 802.11be, beyond IEEE 802.11be), or Wi-Fi Alliance (WFA) Standards (e.g., Wi-Fi 7, Wi-Fi 8) technology.

Communications described herein may be determined, generated, sent, and/or received using any quantity of messages, information elements, fields, parameters, values, indications, information, bits, and/or the like. While one or more examples may be described herein using any of the terms/phrases message, information element, field, parameter, value, indication, information, bit(s), and/or the like, one skilled in the art understands that such communications may be performed using any one or more of these terms, including other such terms. For example, one or more parameters, fields, and/or information elements (IEs), may comprise one or more information objects, values, and/or any other information. An information object may comprise one or more other objects. At least some (or all) parameters, fields, IEs, and/or the like may be used and can be interchangeable depending on the context. If a meaning or definition is given, such meaning or definition controls.

One or more elements in examples described herein may be implemented as modules. A module may be an element that performs a defined function and/or that has a defined interface to other elements. The modules may be implemented in hardware, software in combination with hardware, firmware, wetware (e.g., hardware with a biological element) or a combination thereof, all of which may be behaviorally equivalent. For example, modules may be implemented as a software routine written in a computer language configured to be executed by a hardware machine (such as C, C++, Fortran, Java, Basic, Matlab or the like) or a modeling/simulation program such as Simulink, Stateflow, GNU Octave, or LabVIEWMathScript. Additionally or alternatively, it may be possible to implement modules using physical hardware that incorporates discrete or programmable analog, digital and/or quantum hardware. Examples of programmable hardware may comprise: computers, microcontrollers, microprocessors, application-specific integrated circuits (ASICs); field programmable gate arrays (FPGAs); and/or complex programmable logic devices (CPLDs). Computers, microcontrollers and/or microprocessors may be programmed using languages such as assembly, C, C++ or the like. FPGAs, ASICs and CPLDs are often programmed using hardware description languages (HDL), such as VHSIC hardware description language (VHDL) or Verilog, which may configure connections between internal hardware modules with lesser functionality on a programmable device. The above-mentioned technologies may be used in combination to achieve the result of a functional module.

One or more features described herein may be implemented in a computer-usable data and/or computer-executable instructions, such as in one or more program modules, executed by one or more computers or other devices. Generally, program modules include routines, programs, objects, components, data structures, etc. that perform particular tasks or implement particular abstract data types when executed by a processor in a computer or other data processing device. The computer executable instructions may be stored on one or more computer readable media such as a hard disk, optical disk, removable storage media, solid state memory, RAM, etc. The functionality of the program modules may be combined or distributed as desired. The functionality may be implemented in whole or in part in firmware or hardware equivalents such as integrated circuits, field programmable gate arrays (FPGA), and the like. Particular data structures may be used to more effectively implement one or more features described herein, and such data structures are contemplated within the scope of computer executable instructions and computer-usable data described herein.

A non-transitory tangible computer readable media may comprise instructions executable by one or more processors configured to cause operations of communications described herein. An article of manufacture may comprise a non-transitory tangible computer readable machine-accessible medium having instructions encoded thereon for enabling programmable hardware to cause a device (e.g., a wireless device, wireless communicator, a wireless device, a base station, and the like) to allow operation of multi-carrier communications described herein. The device, or one or more devices such as in a system, may include one or more processors, memory, interfaces, and/or the like. Other examples may comprise communication networks comprising devices such as access points (APs), AP multi-link devices(MLDs), stations (STAs), non-AP STAs, non-AP MLDs, base stations, wireless devices or user equipment (wireless device), servers, switches, antennas, and/or the like. A network may comprise any wireless technology, including but not limited to, cellular, wireless, Wi-Fi, 4G, 5G, 6G, any generation of 3GPP or other cellular standard or recommendation, any non-3GPP network, wireless local area networks, wireless personal area networks, wireless ad hoc networks, wireless metropolitan area networks, wireless wide area networks, global area networks, satellite networks, space networks, and any other network using wireless communications. Any device (e.g., a wireless device, a base station, or any other device) or combination of devices may be used to perform any combination of one or more of steps described herein, including, for example, any complementary step or steps of one or more of the above steps.

Although examples are described above, features and/or steps of those examples may be combined, divided, omitted, rearranged, revised, and/or augmented in any desired manner. Various alterations, modifications, and improvements will readily occur to those skilled in the art. Such alterations, modifications, and improvements are intended to be part of this description, though not expressly stated herein, and are intended to be within the spirit and scope of the descriptions herein. Accordingly, the foregoing description is by way of example only, and is not limiting.

## Claims

1. A method comprising:
receiving, by a first wireless device from a second wireless device, via a first link, an acknowledgment message indicating:
an error in a first data unit being transmitted by the first wireless device to the second wireless device via a second link; and
a third link between the first wireless device and the second wireless device; and
based on the acknowledgment message, transmitting, to the second wireless device and via the third link, a second data unit comprising at least part of the first data unit indicated by the error.

2. The method of claim 1, wherein:
the acknowledgment message comprises an acknowledgment frame,
the first data unit comprises a first physical layer protocol data unit (PPDU); and
the second data unit comprises a second PPDU.

3. The method of any one of claims 1 or 2, wherein the first data unit comprises a physical layer protocol data unit (PPDU), and wherein the error comprises at least one of:
an error in a physical layer (PHY) header of the PPDU; or
an error in a medium access control (MAC) protocol data unit (MPDU) of the PPDU.

4. The method of any one of claims 1 to 3, wherein the acknowledgment message further indicates one or more links other than the third link.

5. The method of any one of claims 1 to 4, wherein:
the first link corresponds to a first frequency channel;
the second link corresponds to a second frequency channel different from the first frequency channel; and
the third link corresponds to a third frequency channel different from the first frequency channel and different from the second frequency channel.

6. The method of any one of claims 1 to 5, further comprising transmitting the second data unit concurrently with transmitting the first data unit.

7. The method of any one of claims 1 to 6, further comprising:
transmitting, to the second wireless device and via the first link, a response message to the acknowledgment message.

8. The method of any one of claims 1 to 7, further comprising:
monitoring, during transmission of the first data unit, the first link for the acknowledgment message.

9. The method of any one of claims 1 to 8, wherein the acknowledgment message further indicates one or more links other than the third link, and wherein the method further comprises transmitting, to the second wireless device and via the first link, a response message indicating a selection of the third link.

10. The method of any one of claims 1 to 9, wherein the first data unit comprises a physical layer protocol data unit (PPDU), and wherein the acknowledgment message comprises a field indicating whether the error is in a physical layer header of the PPDU or in a medium access control protocol data unit of the PPDU.

11. The method of any one of claims 1 to 10, further comprising:
based on the error, stopping transmission of the first data unit.

12. The method of any one of claims 1 to 11, wherein the acknowledgment message comprises a negative acknowledgment (NACK) frame.

13. A computing device comprising:
one or more processors; and
memory storing instructions that, when executed by the one or more processors,
cause the computing device to perform the method of any one of claims 1 to 12.

14. A system comprising:
a first wireless device configured to perform the method of any one of claims 1 to 12; and
a second wireless device configured to send the acknowledgment.

15. A computer-readable medium storing instructions that, when executed, cause performance of the method of any one of claims 1 to 12.
